# EUROPÄISCHE PATENTSCHRIFT

(11) **EP 1 243 447 B1**
(45) Veröffentlichungstag und Bekanntmachung des Hinweises auf die Patenterteilung: **21.12.2005**
(21) Anmeldenummer: 02004708.0
(22) Anmeldetag: 01.03.2002
(51) Int. Cl.: B60G 17/052, B60G 17/04

(54) **Geschlossene Niveauregelanlage für Fahrzeuge**
Closed height control device for vehicles
Dispositif fermé de réglage du niveau pour véhicules

(30) Priorität: 24.03.2001 EP 01107341; 30.10.2001 EP 01125833
(43) Veröffentlichungstag der Anmeldung: 25.09.2002
(73) Patentinhaber: Continental Aktiengesellschaft, 30165 Hannover (DE)
(72) Erfinder: Westerkamp, Helge, 30171 Hannover (DE); Behmenburg, Christof, 31867 Lauenau (DE); Folchert, Uwe, Dr., 31867 Lauenau (DE); Grabherr, Werner, 31535 Neustadt (DE); Hein, Dierk, 30900 Wedemark (DE)

(56) Entgegenhaltungen:
- DE-A- 3 346 911
- DE-A- 10 055 108
- DE-C- 19 959 556
- US-A- 4 836 511
- PATENT ABSTRACTS OF JAPAN vol. 007, no. 009 (M-185), 14. Januar 1983 (1983-01-14) -& JP 57 167811 A (ATSUGI JIDOUSHIYA BUHIN KK), 15. Oktober 1982 (1982-10-15)
- PATENT ABSTRACTS OF JAPAN vol. 005, no. 002 (M-049), 9. Januar 1981 (1981-01-09) -& JP 55 136611 A (ATSUGI MOTOR PARTS CO LTD), 24. Oktober 1980 (1980-10-24)

## Beschreibung

Die Erfindung betrifft eine geschlossene Niveauregelanlage für Fahrzeuge gemäß dem Oberbegriff des Anspruchs 1.

Eine derartige Niveauregelanlage ist aus der DE 199 59 556 C1 bekannt. Die aus dieser Druckschrift bekannte Niveauregelanlage weist einen Lufttrockner auf, über den Luft mit Hilfe des Kompressors aus der Atmosphäre angesaugt und zum Leckage-Ausgleich in den Druckmittelvorratsbehälter überführt werden kann. Zur Regeneration des Lufttrockners kann aus dem Druckmittelvorratsbehälter Druckluft über den Lufttrockner in die Atmosphäre abgelassen werden. Durch die Integration des Lufttrockners in die Niveauregelanlage ist weitgehend sichergestellt, dass sich in der Niveauregelanlage entfeuchtete Luft befindet, so dass die Bestandteile der Niveauregelanlage vor Korrosion und Vereisung geschützt sind. Es ist jedoch festzustellen, dass bei der aus der Druckschrift bekannten Niveauregelanlage der Lufttrockner direkt der Atmosphäre zugewandt ist, so dass er ständig Luftfeuchtigkeit aus dieser aufnimmt. Dies kann unter Umständen dazu führen, dass der Lufttrockner seine Funktion nicht oder nicht ausreichend erfüllt. Dieses Problem könnte dadurch gelöst werden, dass der Lufttrockner entsprechend dimensioniert wird, was jedoch zu einem komplizierten Aufbau und hohen Kosten des Lufttrockners führen würde. Weiterhin zeigt die JP-A- 57 167811 eine Niveauregelanlage, wobei der Trockher zwischen dem Kompressoreingang und dem Druckmittelvorratbehälter angeordnet ist.

Der Erfindung liegt die Aufgabe zu Grunde, eine geschlossene Niveauregelanlage zu schaffen, die einen Lufttrockner aufweist, der immer zur Lufttrocknung zur Verfügung steht und der darüber hinaus einen einfachen Aufbau aufweisen kann.

Die Aufgabe wird durch die kennzeichnenden Merkmale des Anspruchs 1 gelöst.

Ein Vorteil der Erfindung ist darin zu sehen, dass der Lufttrockner in einer Druckluftleitung der Niveauregelanlage angeordnet und zumindest durch das Ansaugventil bzw. durch das Ablassventil vollständig von der Atmosphäre abgeschirmt ist. Somit ist der Gefahr vorgebeugt, dass der Lufttrockner ständig Luftfeuchtigkeit aus der Atmosphäre aufnimmt. Ein weiterer Vorteil der Erfindung ist darin zu sehen, dass der Lufttrockner auf der Kompressorausgangsseite (d.h. auf der Druckseite des Kompressors) angeordnet ist, was zu einer besonders hohen Effektivität des Lufttrockners während des Trocknungsbetriebs führt. Aus diesem Grunde kann der Lufttrockner einen einfachen Aufbau und ein klein dimensioniertes Trocknerbett aufweisen. Ein weiterer Vorteil der Erfindung ist darin zu sehen, dass, obwohl der Lufttrockner vollständig in die geschlossene Niveauregelanlage integriert ist, Druckluft aus dem Druckluftvorratsbehälter über den Lufttrockner (zu dessen Regeneration) in die Atmosphäre abgelassen werden kann. Ein weiterer Vorteil der Erfindung ist schließlich darin zu sehen, dass der Lufttrockner während des Regenerationsbetriebs in der entgegengesetzten Richtung durchströmt wird als während des Trocknungsbetriebs. Dadurch ist eine gute Regeneration des Trockners gewährleistet (Näheres siehe Figurenbeschreibung).

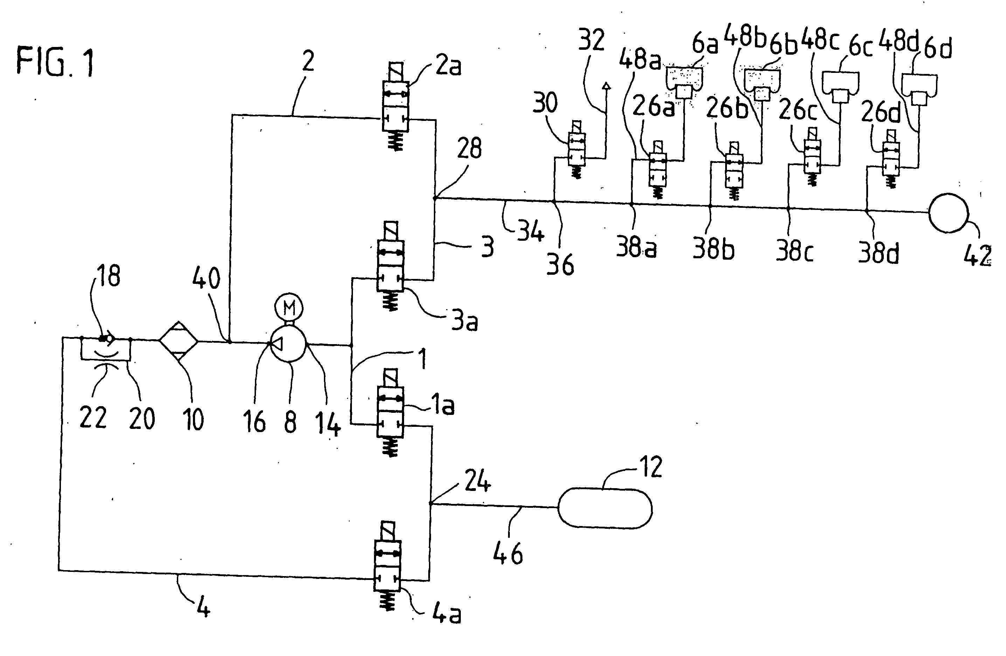

Anspruch 2 betrifft ein erstes Ausführungsbeispiel der Erfindung, das im Zusammenhang mit der Figur 1 näher erläutert wird. Der Vorteil des Ausführungsbeispiels ist darin zu sehen, dass in den vier Druckluftleitungen ausschließlich 2/2-Wegeventile angeordnet sind, die einen einfachen Aufbau aufweisen und preiswert sind.

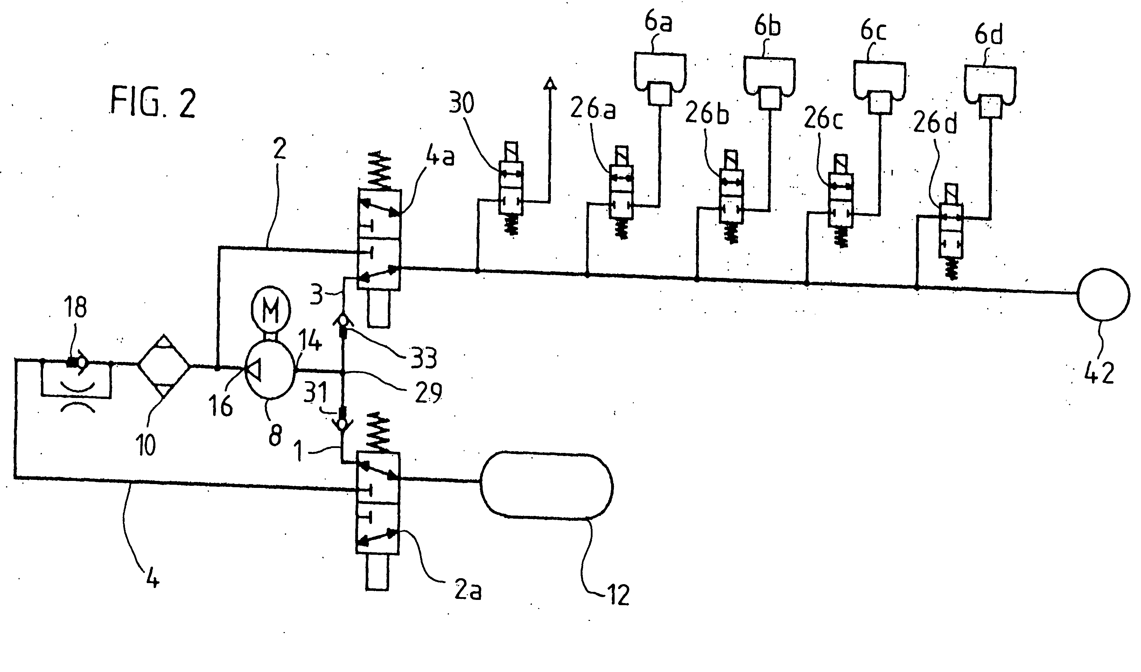

Anspruch 3 betrifft ein weiteres Ausführungsbeispiel der Erfindung, das im Zusammenhang mit der Figur 2 näher erläutert wird. Der Vorteil des Ausführungsbeispiels ist darin zu sehen, dass in den vier Druckluftleitungen nur zwei 3/2-Wegeventile angeordnet sind, die einen einfachen Aufbau aufweisen und preiswert sind.

Gemäß einer Weiterbildung nach Anspruch 4 der oben genannten Ausführungsbeispiele enden die erste Druckluftleitung, die von dem Druckluftbehälter ausgeht, und die dritte Druckluftleitung, die von den Druckmittelkammern ausgeht, in einem gemeinsamen Punkt, der unmittelbar mit dem Kompressoreingang verbunden ist. Der Vorteil dieser Weiterbildung ist darin zu sehen, dass ausgehend von dem gemeinsamen Punkt die erste Druckluftleitung und die dritte Druckluftleitung in einer gemeinsamen Druckluftleitung auf den Kompressoreingang geführt werden und somit der Bedarf an Druckluftleitungen reduziert wird.

Eine Weiterbildung der Erfindung nach Anspruch 5 ist dadurch gekennzeichnet, dass
- in der ersten Druckluftleitung zwischen dem gemeinsamen Punkt und dem steuerbaren Wegeventil, mit dem die erste Druckluftleitung durchschaltbar ist, ein zum Kompressoreingang hin öffnendes Rückschlagventil liegt, und dass
- in der dritten Druckluftleitung zwischen dem gemeinsamen Punkt und dem steuerbaren Wegeventil, mit dem die dritte Druckluftleitung durchschaltbar ist, ein weiteres zum Kompressoreingang hin öffnendes Rückschlagventil liegt.

Der Vorteil dieser Weiterbildung ist darin zu sehen, dass in einer bestimmten Stellung der beiden 3/2-Wegeventile ein Überströmen von Druckluft aus den Druckmittelkammern in den Druckmittelvorratbehälter unmöglich ist, und zwar unabhängig davon, ob der Luftdruck in den Druckmittelkammern größer oder kleiner ist als der Luftdruck in dem Druckmittelvorratbehälter. Im Ruhezustand der Niveauregelanlage, wenn also keine Regelung erfolgt, können die steuerbaren Wegeventile beispielsweise in diese Stellung überführt werden, so dass ein unbeabsichtigtes Überströmen von Druckluft zwischen den Druckmittelkammern und dem Druckmittelvorratbehälter nicht stattfinden kann. Darüber hinaus wird durch einen derartigen definierten Zustand der steuerbaren Wegeventile eine Druckmessung des Druckes in den Druckmittelkammern mit Hilfe eines Drucksensors auf einfache Art und Weise möglich (Näheres siehe Ausführungen zu Fig. 2). Die mit der Weiterbildung erreichten Voreile werden bei Erhalt sämtlicher Funktionen der Niveauregelanlage erreicht. Insbesondere ist es weiterhin möglich, aus dem Druckmittelvorratbehälter über den Lufttrockner Druckluft in die Atmosphäre abzuführen, um den Lufttrockner zu regenerieren (Näheres siehe Ausführungen zu Fig. 2).

Gemäß einer Weiterbildung nach Anspruch 6 der oben genannten Ausführungsbeispiele weist die Niveauregelanlage ein weiteres steuerbares Wegeventil auf, welches die Verbindung zwischen den Luftfedern und dem Kompressor und Lufttrockner sperrt, aber eine Verbindung zwischen den Luftfedern und dem Drucksensor zulässt. Ein Luftaustausch und damit ein Druckausgleich zwischen dem Lufttrockner bzw. Kompressor und den Luftfeder, z.B. bei einer Druckmessung in einer Luftfeder, kann, wenn das Druckniveau des Lufttrockners bzw. Kompressors und der jeweiligen Luftfeder unterschiedlich ist, aufgrund des Volumens des Lufttrockners bzw. Kompressors zu einer Druckänderung in der jeweiligen Luftfeder führen, welche eine Schiefstellung des Fahrzeuges erzeugt und damit eine Nachregelung des Fahrzeugniveaus notwendig macht. Der Vorteil der Weiterbildung der Erfindung ist, dass bei einer Druckmessung in einer Luftfeder unabhängig vom Schaltzustand der beiden 3/2-Wegeventile keine Luft in den Lufttrockner bzw. Kompressor entweichen kann und damit keine Druckänderung in der jeweiligen Luftfeder stattfindet, da das zusätzliche steuerbare Wegeventil diese Verbindung sperrt, und somit keine Schiefstellung des Fahrzeuges erzeugt wird und keine Nachregelung des Fahrzeugniveaus nach einer Druckmessung in einer Luftfeder notwendig ist.

Gemäß einer Weiterbildung nach Anspruch 7 des ersten Ausführungsbeispiels ist die Ablassleitung mit der Ansaugleitung verbunden, wobei zwischen dem Punkt, in dem die Ablassleitung von der vierten Druckluftleitung abzweigt und dem Punkt, in dem sie mit der Ansaugleitung verbunden ist, ein Wegeventil angeordnet ist, das in einem ersten Schaltzustand die Ablassleitung sperrt und in einem zweiten Schaltzustand die Ablassleitung durchschaltet, so dass das Ansaugventil gleichzeitig als Ablassventil genutzt werden kann. Der Vorteil dieser Weiterbildung des ersten Ausführungsbeispiels ist darin zu sehen, dass kein separates Ansaugventil bereitgestellt zu werden braucht.

Gemäß einer Weiterbildung der Erfindung nach Anspruch 8 liegt das Ansaugventil in einer Druckluftleitung, die von der zweiten gemeinsamen Druckluftleitung abzweigt. Der Vorteil dieser Weiterbildung ist darin zu sehen, dass das Ansaugventil in unmittelbarer Nähe derjenigen Ventile liegt, die den einzelnen Druckmittelkammern vorgeschaltet sind.

Gemäß einer Weiterbildung der Erfindung nach Anspruch 9 stimmt die Ablassleitung zwischen dem Punkt, in dem sie von der vierten Druckluftleitung abzweigt, und dem Punkt, in den sie mit der Ansaugleitung verbunden ist, mit der zweiten Druckluftleitung überein. Der Vorteil dieser Weiterbildung ist darin zu sehen, dass die zweite Druckluftleitung bereichsweise doppelt genutzt wird (nämlich einmal als Ablassleitung und einmal als Verbindungsstück des Druckmittelvorratsbehälters mit den Druckmittelkammern), so dass die Länge der Druckluftleitungen in der Niveauregelanlage reduziert werden kann.

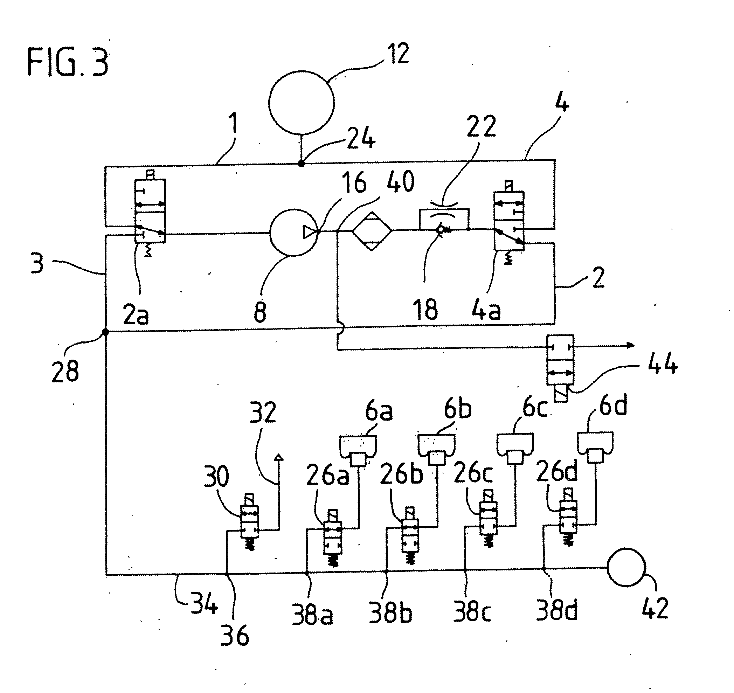

Anspruch 10 betrifft ein weiteres Ausführungsbeispiel der Erfindung, das im Zusammenhang mit der Figur 3 näher erläutert wird.

Gemäß einer Weiterbildung der Erfindung nach Anspruch 11 ist in der vierten Druckluftleitung zwischen dem Lufttrockner und dem Druckmittelvorratsbehälter ein zum Lufttrockner hin öffenendes Rückschlagventil angeordnet, das von einer Druckluftleitung, in der eine Drossel angeordnet ist, überbrückt wird. Der Vorteil dieser Weiterbildung ist darin zu sehen, dass während des Überführens von Druckluft aus dem Druckmittelvorratsbehälter über den Lufttrockner in die Atmosphäre die Druckluft über die Drossel geführt wird, so dass sie vor Eintritt in den Lufttrockner entspannt wird. Dadurch ist eine besonders gute Regeneration des Lufttrockners gewährleistet und es braucht nur eine geringe Luftmenge abgelassen zu werden, um diesen vollständig zu regenerieren. Dennoch ist gewährleistet, dass Druckluft schnell aus den Druckmittelkammern in den Druckmittelvorratsbehälter überführt werden kann (so dass ein schnelles Absenken des Fahrzeugaufbaus möglich ist), da in diesem Fall die Druckluft ausgehend von dem Lufttrockner über das Rückschlagventil in den Druckmittelvorratsbehälter überführt wird (Näheres siehe Figurenbeschreibung).

Gemäß einer Weiterbildung der Erfindung nach Anspruch 12 weist die Niveauregelanlage einen Drucksensor auf, der in einer von den Druckmittelkammern ausgehenden Druckluftleitung angeordnet ist, wobei sich zwischen jeder Druckmittelkammer und dem Drucksensor ein steuerbares Wegeventil befindet, das in einem ersten Schaltzustand die Druckmittelkammern von dem Drucksensor trennt und in einem zweiten Schaltzustand die Druckmittelkammer mit dem Drucksensor verbindet. Der Vorteil dieser Weiterbildung ist darin zu sehen, dass mit dem Drucksensor auf einfache Art und Weise der Druck in den Druckmittelkammern gemessen werden kann. Darüber hinaus ist es ebenfalls möglich, mit Hilfe des Drucksensors den Druck in den Druckmittelvorratsbehälter zu messen (Näheres siehe Figurenbeschreibung).

Bei den Niveauregelanlagen der eingangs genannten Art besteht ferner das Bedürfnis, die Regelvorgänge möglichst schnell durchzuführen. Dies betrifft nicht nur Regelvorgänge während der Fahrt, sondern auch solche im Stillstand des Fahrzeuges oder bei der Fahrt mit geringer Geschwindigkeit. Dabei müssen oft große Höhenunterschiede bewältigt werden. So besteht bei relativ hoch gebauten Fahrzeugen wie z.B. den sog. Sports Utility Vehicles der Wunsch, das Fahrzeug beim Anhalten abzusenken, um so ein bequemes Ein- und Aussteigen von Fahrer und Beifahrer zu ermöglichen, und das Fahrzeug bei Fahrtantritt wieder auf eine für die Fahrt optimale Höhe zu heben. Bei herkömmlichen Niveauregelanlagen dauert es relativ lange, bis die Luft aus allen Druckmittelkammern abgezogen ist, so dass die Fahrgäste gezwungen sind, nach Anhalten des Fahrzeuges zu warten, ehe sie dieses auf bequeme Weise verlassen können. Geschlossene Niveauregelanlagen sind hier bereits im Vorteil gegenüber offenen Systemen, bei denen die Luft nur langsam über den Lufttrockner abströmen kann. Durch Weiterbildungen der Erfindung gemäß den Unteransprüche 9 - 14 sollen weitere Verbesserungen in dieser Hinsicht erreicht werden.

Gemäß einer Weiterbildung der Erfindung nach Anspruch 13 ist die Niveauregelanlage mit mehreren Kompressoren ausgestattet, wobei jeder Kompressor für sich auf die vorgehend beschriebene Weise mit dem Druckmittelvorratsbehälter und mit bestimmten Druckmittelkammern verbunden ist. Somit ist nicht mehr ein einziger Kompressor für die gesamte Anlage mit allen Druckmittelkammern zuständig, sondern ein einzelner Kompressor hat jeweils nur einen Teil der Druckmittelkammern, im Extremfall sogar nur eine einzige Druckmittelkammer, zu versorgen. Mehrere Kompressoren können gleichzeitig den Druckmittelkammern Luft zuführen oder Luft aus den Druckmittelkammern abziehen. Bei einem derartigen Parallelbetrieb können diese Vorgänge sehr viel schneller erfolgen als bei herkömmlichen Niveauregelanlagen, bei denen die gesamte Luft über einen einzigen Kompressor geführt wird. Die Weiterbildung der Erfindung nach Anspruch 9 hat somit den Vorteil, dass man mit ihr Niveauänderungen des Fahrzeuges schneller herbeiführen kann als mit einer herkömmlichen Niveauregelanlage. Die Weiterbildung der Erfindung nach Anspruch 9 hat ferner den Vorteil, dass einem Teil der Druckmittelkammern Luft zugeführt und zur gleichen Zeit Luft aus anderen Druckmittelkammern abgezogen werden kann und Luft zwischen einzelnen Druckmittelkammern oder Gruppen von Druckmittelkammern ausgetauscht werden kann. Gegenüber einer Anlage gemäß den Ansprüchen 1 bis 8, die zwar ein individuelles Ansteuern der einzelnen Luftfedern ermöglicht, aber nur entweder im Betrieb "Auffüllen" oder im Betrieb "Entleeren", nicht jedoch in beiden Betriebsarten gleichzeitig, ergibt sich dadurch der Vorteil erweiterter Steuerungsmöglichkeiten. Bei dieser Anlage sind daher gute Möglichkeiten gegeben, weitere Programme zur Steuerung und Regelung des Fahrwerkes, die über eine Regelung des Niveaus hinausgehen können, umzusetzen.

Gemäß der Ausführungsform nach Anspruch 14 ist den Druckmittelkammern jeder Achse, gemäß der Ausführungsform nach Anspruch 15 sogar den Druckmittelkammern jeden Rades des Fahrzeuges ein eigener Kompressor zugeordnet. Die Ausführungsform nach Anspruch 10 hat dabei den Vorteil, dass rasche Druckänderungen bereits mit geringem Aufwand erreichbar sind. Bei einem Fahrzeug mit zwei Achsen kann eine Verdoppelung der Geschwindigkeit bei Niveauänderungen gegenüber herkömmlichen Anlagen mit nur einem Kompressor erreicht werden. Die Ausführungsform nach Anspruch 11 hat den Vorteil, dass noch schnellere Reaktionen möglich sind, und dass zudem bei jedem Rad individuelle Regulierungen völlig unabhängig von den anderen Druckmittelkammern vorgenommen werden können.

Gemäß einer Weiterbildung der Erfindung nach Anspruch 16 sind für die gesamte Niveauregelanlage nur ein Lufttrockner sowie eine Ansaug- und eine Ablassleitung mit den zugehörigen Ventilen vorgesehen. Diese Ausführungsform hat den Vorteil, dass der bauliche Aufwand gering gehalten wird. Es liegt ihr die Erkenntnis zugrunde, dass bei einer geschlossenen Niveauregelanlage ein Luftaustausch mit der Umgebung in nur geringem Maße stattfindet, und dass alle Komponenten der Anlage über den Druckmittelvorratsbehälter miteinander in Verbindung stehen.

Gemäß einer Weiterbildung der Erfindung nach Anspruch 17 sind den Druckmittelkammern der einzelnen Fahrzeugachsen jeweils eigene Zwischenspeicher für das Druckmittel zugeordnet. Beim Absenken des Fahrzeuges können diese Zwischenspeicher in kurzer Zeit große Mengen Luft aus den Druckmittelkammern aufnehmen, wodurch ein schnelles Absenken des Fahrzeuges ermöglicht wird. Von den Zwischenspeichern kann die Luft dann über den Kompressor in den Druckmittelvorratsbehälter gefördert werden, wobei dieser Transport der Luft langsam erfolgen kann, ohne dass dadurch das Absenken des Fahrzeuges verlangsamt würde. Bei der Anlage nach Anspruch 16 wird durch die Zwischenspeicher das Entleeren der Druckmittelkammern zur Niveauabsenkung des Fahrzeuges von der Strömung des Druckmittels in den übrigen Teilen der Anlage, zu der der Kompressor, die Ventile und relativ lange Leitungssysteme gehören, zeitlich entkoppelt. Es ist ein schnelles Entleeren der Druckmittelkammern möglich, ohne dass die gesamte Anlage für eine schnelle Verschiebung großer Luftmassen ausgelegt zu sein braucht. Im Vergleich zu den alternativen Ausführungsformen nach den Ansprüchen 12 bis 15 hat diese Ausführungsform den Vorteil, dass nur ein einziger Kompressor erforderlich ist.

Vorzugsweise sind die Ausgangsleitungen der Zwischenspeicher mit Rückschlagventilen versehen, die ein ungehindertes Abströmen des Druckmittels aus dem Zwischenspeicher zulassen, eine Zuströmung der Luft aus der Anlage jedoch verhindern. Auf diese Weise wird erreicht, dass der Druck in den Zwischenspeichern stets geringer als in den Druckmittelkammern ist.

Gemäß einer Weiterbildung der Erfindung nach Anspruch 19 ist den einzelnen Druckmittelkammern jeweils ein Wegeventil zugeordnet, das mit den zum Eingang des Kompressors führenden Druckmittelleitungen verbunden ist. Durch diese Ventile wird eine Steuerung zum Ausgleich von Nick- und Wankbewegungen des Fahrzeuges ermöglicht, wie weiter unten näher erläutert ist.

Gemäß einer Weiterbildung der Erfindung nach Anspruch 20 ist eine zum Anschluß externer Geräte dienende Leitung vorgesehen, die mit den Druckmittelleitungen verbunden ist. Diese Weiterbildung der Erfindung hat den Vorteil, dass die Druckluft in der Anlage für zusätzliche Einrichtungen genutzt werden kann. In vorteilhafter Weise nach Anspruch 21 ist die Leitung zum Anschluß externer Geräte mit einem Verschluß ausgestattet, der nur dann öffnet, wenn ein externes Gerät an die Leitung angeschlossen ist. Vorzugsweise dient die nach außen führende Leitung zum Anschluß einer Reifenfüllvorrichtung.

Gemäß einer Weiterbildung der Erfindung nach Anspruch 23 ist die zum Anschluß dienende Leitung direkt mit dem Kompressorausgang verbunden. Diese Ausführungsform hat den Vorteil, das bei einer bei einer Förderung von aus der Umgebung angesaugter Luft durch den Kompressor zum externen Anschluss der Lufttrocker nicht durchströmt und somit von unnötigen Belastungen befreit wird.

Ausführungsbeispiele und weitere Vorteile der Erfindung werden im Zusammenhang mit den nachstehenden Figuren erläutert, darin zeigen:
- Fig. 1 bis 3: eine Niveauregelanlage in schematischer Darstellung,
- Fig. 4 bis 9: jeweils eine gegenüber den Fig. 1 und 2 abgewandelte Ausführungsform einer Niveauregelanlage in schematischer Darstellung

Figur 1 zeigt eine Niveauregelanlage in schematischer Darstellung, die Druckmittelkammern in Form von Luftfedern 6a - 6b, einen Kompressor 8, einen Lufttrockner 10 und einen Druckluftvorratsbehälter 12 enthält. Der Druckluftbehälter 12 steht über eine erste Druckluftleitung 1, die über ein erstes Wegeventil 1a geführt wird, mit dem Kompressoreingang 14 und eine vierte Druckluftleitung 4, in der ein steuerbares 2/2-Wegeventil 4a und der Lufttrockner 10 liegt, mit dem Kompressorausgang 16 in Verbindung. Zwischen dem Lufttrockner 10 und dem Druckluftvorratsbehälter 12 ist in der vierten Druckluftleitung 4 ein zum Druckluftvorratsbehälter 12 hin öffnendes Rückschlagventil 18 angeordnet, das von einer Druckluftleitung 20, in der eine Drossel 22 liegt, überbrückt wird. Die erste Druckluftleitung 1 und die vierte Druckluftleitung 4 werden in einem Punkt 24, der zwischen den steuerbaren 2/2-Wegeventilen 1a und 4a und dem Druckluftvorratsbehälter 12 liegt, zusammengeführt. Ausgehend von diesem Punkt 24 werden sie in einer gemeinsamen Druckluftleitung 46 zu dem Druckluftvorratsbehälter 12 geführt.

Der Kompressorausgang 16 ist über eine zweite Druckluftleitung 2, die über ein steuerbares Wegeventil 2a und jeweils ein einer Luftfeder 6a - 6d zugeordnetes steuerbares Wegeventil 26a - 26d geführt wird, mit jeder Luftfeder 6a - 6d verbindbar. Darüber hinaus ist der Kompressoreingang 14 über eine dritte Druckluftleitung 3, die über ein steuerbares Wegeventil 3a und die steuerbaren Wegeventile 26a - 26d geführt wird, ebenfalls mit jeder Luftfeder 6a - 6d verbindbar. Die zweite Druckluftleitung 2 und die dritte Druckluftleitung 3 werden in einem Punkt 28, der zwischen den Wegeventilen 2a und 3a und den Luftfedern 6a - 6d liegt, miteinander verbunden. Ausgehend von diesem Punkt 28 werden sie über eine gemeinsame Druckluftleitung 34 und über einzelne Druckluftleitungen 48a - 48d (die in den Punkten 38a - 38d von der gemeinsamen Druckluftleitung 34 abzweigen und in denen die Wegeventile 26a - 26d liegen) zu den Luftfedern 6a - 6d geführt.

Die 2/2-Wegeventile 1a - 4a können in einem ersten Ventilblock und die Wegeventile 26a - 26d und das Ansaugventil 30 (dessen Funktion später erläutert wird) können in einem zweiten Ventilblock zusammengefasst werden.

In Folgendem wird erläutert, wie in der Niveauregelanlage eine Luftfeder 6a - 6d über den Kompressor 8 aus dem Druckluftvorratsbehälter 12 aufgefüllt werden kann (am Beispiel der Luftfeder 6a). Dazu werden zunächst von einer (nicht gezeigten) Steuereinheit die Wegeventile 1a, 2a und 26a angesteuert, so dass diese von dem in der Figur 1 gezeigten ersten Schaltzustand in den zweiten Schaltzustand übergehen. Die Druckluftleitung 1 ist dann durchgeschaltet, so dass der Druckluftbehälter 12 mit dem Kompressoreingang 14 verbunden ist. Darüber hinaus ist die Druckluftleitung 2 durchgeschaltet, so dass der Kompressorausgang 16 mit der Luftfeder 6a verbunden ist. Somit kann Druckluft aus dem Druckluftvorratsbehälter 12 über das Wegeventil 1a, den Kompressor 8, über das Wegeventil 2a und über das Wegeventil 26a in die Luftfeder 6a überführt werden. Die Steuereinheit steuert ferner den Kompressor 8 an, so dass dieser beginnt zu laufen und die Luftfeder 6a aufgefüllt wird. Soll der Auffüllvorgang abgebrochen werden, so werden die Wegeventile 1 a, 2a und 26a von der Steuereinheit nicht weiter bestromt, so dass diese wieder in den ersten Schaltzustand übergehen. Darüber hinaus wird der Kompressor 8 nicht mehr angesteuert, so dass er nicht mehr läuft.

Im Folgenden wird erläutert, wie aus den Luftfedern 6a - 6d über den Kompressor 8 Druckluft in den Druckluftvorratsbehälter 12 überführt werden kann (am Beispiel der Luftfeder 6a). Zunächst werden von der Steuereinheit der Niveauregelanlage die Wegeventile 26a, 3a und 4a angesteuert, so dass diese von den in der Figur 1 gezeigten ersten Schaltzustand in den zweiten Schaltzustand übergehen. In diesem Fall ist die Luftfeder 6a über die Druckluftleitung 3 mit dem Kompressoreingang 14 verbunden. Darüber hinaus ist der Kompressorausgang 16 über die Druckluftleitung 4 mit dem Druckluftvorratsbehälter 12 verbunden. Die Luftfeder 6a kann dann über das Wegeventil 26a, das Wegeventil 3a, den Kompressor 8, den Lufttrockner 10, das Rückschlagventil 18 und das Wegeventil 4a in den Druckluftvorratsbehälter 12 entleert werden. Während der Entleerung wird von der Steuereinheit der Niveauregelanlage der Kompressor 8 angesteuert, so dass dieser beginnt zu laufen und den Entleerungsvorgang unterstützt. Zum Beendigen des Entleerungsvorganges werden die Wegeventile 26a, 3a und 4a von der Steuereinheit nicht mehr bestromt, so dass diese wieder in den ersten Schaltzustand übergehen. Darüber hinaus wird der Kompressor 8 nicht mehr angesteuert, so dass dieser aufhört zu laufen.

Der Kompressor 8 fördert sowohl während des Auffüllens als auch während des Entleerens einer Luftfeder 6a - 6d ausschließlich Druckluft vom Kompressoreingang 14 zum Kompressorausgang 16, so dass lediglich ein Kompressor benötigt wird, der nur in eine Richtung Druckluft fördern kann. Das Gleiche gilt für das weiter unten beschriebene Ausführungsbeispiel.

Neben den bisher genannten Bestandteilen verfügt die Niveauregelanlage über ein Ansaugventil 30, das in einer Druckluftleitung liegt, über die der Kompressoreingang 14 mit der Atmosphäre verbindbar ist. Vorzugsweise liegt das Ansaugventil 30 in einer Druckluftleitung 32, die von der Druckluftleitung 34 in einem Punkt 36 abzweigt, der zwischen dem Punkt 28 und den Abzweigungen 38a - 38d zu den Luftfedern 6a - 6d liegt. Über das Ansaugventil 30 kann aus der Atmosphäre wie folgt Druckluft über den Kompressor 8 in den Druckluftvorratsbehälter 12 überführt werden: Zunächst werden von der Steuereinheit der Niveauregelanlage das Ansaugventil 30, das steuerbare Wegeventil 3a und das steuerbare Wegeventil 4a angesteuert, so dass diese von dem in der Figur 1 gezeigten Grundzustand in ihren Schaltzustand übergehen. Darüber hinaus wird von der Steuereinheit der Kompressor 8 angesteuert, so dass dieser beginnt zu laufen. Ausgehend von der Druckluftleitung 32 wird dann über das Ansaugventil 30, das steuerbare Wegeventil 3a, den Kompressor 8, den Lufttrockner 10, das Rückschlagventil 18 und über das steuerbare Wegeventil 4a Druckluft aus der Atmosphäre in den Druckluftvorratsbehälter 12 überführt. In dem Lufttrockner 10 wird die Druckluft dabei getrocknet, wobei er in einer ersten Richtung (in der Figur von rechts nach links) durchströmt wird.

Während des Ansaugvorganges muss verhindert werden, dass die Luftfedern 6a - 6d mit der Atmosphäre verbunden sind und dass der Kompressorausgang 16 mit der Atmosphäre verbunden ist (da der Kompressor 8 ansonsten die aus der Atmosphäre über den Kompressoreingang 14 angesaugte Luft wieder zurück in die Atmosphäre fördern würde). Ersteres wird durch die steuerbaren Wegeventile 26a - 26d und Letzteres durch das steuerbare Wegeventil 2a sichergestellt, die sich während des Ansaugens in den in der Figur 1 gezeigten Schaltzustand befinden.

Die Niveauregelanlage verfügt ferner über eine Druckluftleitung, die von der vierten Druckluftleitung 4 in einem Punkt 40 abzweigt, der zwischen dem Kompressorausgang 16 und dem Lufttrockner 10 liegt und über die der Druckluftvorratsbehälter 12 über den Lufttrockner 10 und über ein Ablassventil mit der Atmosphäre verbindbar ist. In dem gezeigten Ausführungsbeispiel wird diese Druckluftleitung vom Punkt 40 ausgehend bis zum Punkt 36 von der Druckluftleitung 2 (die zwischen den Punkten 28 und 36 von der Druckluftleitung 34 gebildet wird) und ausgehend vom Punkt 36 von der Druckluftleitung 32 gebildet. Als Ablassventil wird bei dem gezeigten Ausführungsbeispiel das Ansaugventil 30. genutzt. Ein Ablassen von Druckluft aus dem Druckluftvorratsbehälter 12 erfolgt wie folgt: Zunächst wird von der Steuereinheit der Niveauregelanlage das steuerbare Wegeventil 4a, das steuerbare Wegeventil 2a und das Ansaugventil 30 angesteuert, so dass diese von dem in der Figur 1 gezeigten Grundzustand in ihren Schaltzustand übergehen. Der Druckluftvorratsbehälter 12 ist dann über das steuerbare Wegeventil 4a, die Drossel 22, den Lufttrockner 10, das steuerbare Wegeventil 2a und das Ansaugventil 30 mit der Atmosphäre verbunden, so dass er in diese entleert werden kann. Während des Ablassvorganges wird der Lufttrockner 10 in der entgegengesetzten Richtung (also von links nach rechts in der Figur) wie während des Auffüllens aus der Atmosphäre durchströmt, so dass er besonders effektiv regenerieren kann.

Während des Ablassvorganges müssen die Luftfedern 6a - 6d durch steuerbare Wegeventile von der Atmosphäre getrennt werden, damit diese nicht unbeabsichtigt entleert werden. Bei dem gezeigten Ausführungsbeispiel erfolgt dies durch die steuerbaren Wegeventile 26a - 26d. Zur Beendigung des Ablassvorganges werden die Wegeventile 4a, 2a und 30 von der Steuereinheit nicht mehr bestromt, so dass diese wieder in ihren Grundzustand übergehen.

Schließlich verfügt die Niveauregelanlage in der Druckluftleitung 34 über einen Drucksensor 42, mit dem der Druck in den Luftfedern 6a - 6d wie folgt gemessen werden kann (erläutert an der Luftfeder 6a): Zunächst wird von der Steuereinheit der Niveauregelanlage das Wegeventil 26a angesteuert, so dass dieses von dem in der Figur 1 gezeigten Grundzustand in seinen Schaltzustand übergeht. Die Luftfeder 6a ist dann mit dem Drucksensor 42 verbunden, so dass dort der entsprechende Druck gemessen und an die Steuereinheit der Niveauregelanlage weitergegeben werden kann. Mit Hilfe des Drucksensors 42 kann ebenfalls der Druck in dem Druckluftvorratsbehälter 12 gemessen. werden, indem von der Steuereinheit die steuerbaren Wegeventile 1a und 3a angesteuert, so dass diese von dem in der Figur 1 gezeigten Grundzustand in ihren Schaltzustand übergehen. Der Druckluftvorratsbehälter 12 ist dann über die steuerbaren Wegeventile 1a und 3a und über die Druckluftleitung 34 mit diesem verbunden, so dass der entsprechende Druck gemessen und an die Steuereinheit weitergegeben werden kann.

Figur 2 zeigt eine Niveauregelanlage, die weitestgehend der in der Figur 1 gezeigten Niveauregelanlage entspricht. Bei der Niveauregelanlage gemäß Figur 2 sind die in der Figur 1 gezeigten steuerbaren Wegeventile 1a und 4a in das steuerbare 3/2-Wegeventil 2a und die in der Figur 1 gezeigten steuerbaren Wegeventile 2a und 3a in das steuerbare 3/2-Wegeventil 4a zusammengefasst. Die Druckluftleitung 1 wird ausgehend von dem Druckluftbehälter 12 über das steuerbare Wegeventile 2a zu einem Punkt 29 geführt. Die Druckluftleitung 3 wird ausgehend von den Luftfedern 6a bis 6d über das steuerbare Wegeventil 4a ebenfalls zu dem Punkt 29 geführt, so dass die Druckluftleitung 1 und die Druckluftleitung 3 in diesem gemeinsamen Punkt 29 miteinander verbunden sind. Der gemeinsame Punkt 29 der Druckluftleitungen 1 und 3 ist (ggf. über eine kurze Druckluftleitung wie auch in der Figur 2 gezeigt) direkt mit dem Kompressoreingang 14 verbunden. In der ersten Druckluftleitung 1 ist zwischen dem gemeinsamen Punkt 29 und dem steuerbaren Wegeventil 2a ein zum gemeinsamen Punkt 29 und zum Kompressoreingang 14 hin öffnendes Rückschlagventil 31 angeordnet. In der Druckluftleitung 3 ist zwischen dem gemeinsamen Punkt 29 und dem steuerbaren Wegeventil 4a ebenfalls ein zum gemeinsamen Punkt 29 und zum Kompressoreingang 14 hin öffnendes Rückschlagventil 33 angeordnet.

Im Folgenden werden die Funktionen der Niveauregelanlage gemäß Figur 2 erläutert. Zum Überführen von Druckluft aus der Luftfeder 6a werden zunächst die steuerbaren Wegeventile 26a und 2a von dem in der Figur 2 gezeigten Schaltzustand in den anderen Schaltzustand überführt. Die Luftfeder 6a ist dann über die Druckluftleitung 3, in der die durchgeschalteten Wegeventile 26a und 4a und das Rückschlagventil 33 liegen, mit dem Kompressoreingang 14 verbunden. Der Kompressorausgang 16 ist über die Druckluftleitung 4, in der der Lufttrockner 10, das Rückschlagventil 18 und das durchgeschaltete Wegeventil 2a liegen, verbunden. Die Luft kann also ausgehend von der Luftfeder 6a mit Hilfe des Kompressors 8 in den Druckluftbehälter 12 überführt werden (Näheres siehe Fig. 1). Während dieses Vorganges ist die Druckluftleitung 2 durch das steuerbare Wegeventil 4a und die Druckluftleitung 1 durch das steuerbare Wegeventil 2a gesperrt. Zur Beendigung des Vorganges wird zumindest das steuerbare Wegeventil 26a wieder in den in der Figur 2 gezeigten Schaltzustand überführt. Für die Luftfedern 6b bis 6d wird entsprechend vorgegangen, mit dem Unterschied, dass die steuerbaren Wegeventile 26b bis 26d entsprechende Schaltstellungen einnehmen.

Zum Überführen von Druckluft aus dem Druckluftbehälter 12 in die Luftfeder 6a werden zunächst die steuerbaren Wegeventile 4a und 26a von dem in der Figur 2 gezeigten Schaltzustand in den anderen Schaltzustand überführt. Der Druckluftbehälter 12 ist dann über die Druckluftleitung 1, in der das durchgeschaltete steuerbare Wegeventil 2a und das Rückschlagventil 31 liegen, mit dem Kompressoreingang 14 verbunden. Der Kompressorausgang 16 ist über die Druckluftleitung 2, in der das durchgeschaltete steuerbare Wegeventil 4a und das steuerbare Wegeventil 26a liegen, mit der Luftfeder 6a verbunden. Es kann also Druckluft von dem Druckluftbehälter 12 über den Kompressor 8 in die Luftfeder 6a überführt werden. Während dieses Vorganges ist die Druckluftleitung 3 durch das steuerbare Wegeventil 4a und die Druckluftleitung 4 durch das steuerbare Wegeventil 2a gesperrt. Zur Beendigung des Vorganges wird zumindest das steuerbare Wegeventil 26a wieder in den in der Figur 2 gezeigten Schaltzustand überführt. Die Luftfedern 6b bis 6d werden auf entsprechende Art und Weise mit Druckluft aus dem Druckluftbehälter 12 befüllt.

Zum Auffüllen des Druckluftspeichers 12 mit Luft aus der Atmosphäre werden zunächst die steuerbaren Wegeventile 30 und 2a von dem in der Figur 2 gezeigten Schaltzustand in den anderen Schaltzustand überführt. Die Atmosphäre ist dann über das steuerbare Wegeventil 30, das steuerbare Wegeventil 4a und das Rückschlagventil 33 mit dem Kompressoreingang 14 verbunden. Der Kompressorausgang 16 ist über die Druckluftleitung 4, in der der Lufttrockner 10, das Rückschlagventil 18 und das durchgeschaltete steuerbare Wegeventil 2a liegt, mit dem Druckluftbehälter 12 verbunden, so dass ein Auffüllen des Druckluftbehälter 12 mit Hilfe des Kompressors 8 mit Luft aus der Atmosphäre möglich ist. Während dieses Vorganges ist die Druckluftleitung 2 durch das steuerbare Wegeventil 4a und die Druckluftleitung 1 durch das steuerbare Wegeventil 2a gesperrt. Zur Beendigung des Vorganges wird zumindest das steuerbare Wegeventil 30 wieder in den in der Figur 2 gezeigten Schaltzustand überführt.

Zum Ablassen von Druckluft aus dem Druckluftbehälter 12 in die Atmosphäre 30 werden zunächst die steuerbaren Wegeventil 2a, 4a und 30 von dem in der Figur 2 gezeigten Schaltzustand in den anderen Schaltzustand überführt. Der Druckluftbehälter 12 ist dann über das steuerbare Wegeventil 2a, die Drossel 22, den Lufttrockner 10, das steuerbare Wegeventil 4a und das steuerbare Wegeventil 30 mit der Atmosphäre verbunden, so dass Druckluft aus dem Druckluftvorratsbehälter 12 in diese strömen kann. Hierbei wird die Druckluft über den Lufttrockner 10 geführt, so dass dieser regeneriert werden kann.

Die obigen Ausführungen zeigen, dass die bisher genannten Funktionen der Niveauregelanlage (Überführen von Druckluft aus den Luftfedern 6a bis 6d in den Druckluftbehälter 12; Überführen von Druckluft aus dem Druckluftbehälter 12 in die Luftfedern 6a bis 6d; Auffüllen des Druckluftbehälters 12 mit Luft aus der Atmosphäre; Ablassen von Druckluft aus dem Druckluftbehälter 12 über den Lufttrockner 10 in die Atmosphäre) durch die Rückschlagventile 31 und 33 nicht beeinträchtigt werden.

Im Folgenden wird erläutert, wie mit Hilfe des Drucksensors 42 der Luftdruck in den Luftfedern 6a bis 6d gemessen werden kann. Während der Druckmessung soll ein Luftaustausch zwischen den Luftfedern 6a bis 6d und dem Druckluftbehälter 12 möglichst vermieden werden, um ein unbeabsichtigtes Absenken bzw. Anheben des Fahrzeugaufbaus zu vermeiden. Es ist also zu vermeiden, dass während der Druckmessung Druckluft aus den Luftfedern 6a bis 6d in den Druckluftbehälter überströmt (dies könnte passieren, wenn der Luftdruck in der zu messenden Luftfeder 6a bis 6d größer ist als der Luftdruck in dem Druckluftbehälter 12). Es ist ebenfalls zu vermeiden, dass während der Druckmessung Druckluft aus dem Druckluftbehälter 12 in die Luftfeder 6a bis 6d überströmt, deren Luftdruck gemessen wird (dies könnte passieren, wenn die Druckluft in der zu messenden Luftfeder 6a bis 6d kleiner ist als in dem Druckluftbehälter 12). Da vor der Druckmessung nicht bekannt ist, ob der Luftdruck in der zu messenden Luftfeder 6a bis 6d größer oder kleiner ist als in dem Druckluftbehälter 12, muss eine Stellung der steuerbaren Wegeventile eingestellt werden, mit der unabhängig von den Druckverhältnissen beide möglichen Fälle wirksam unterdrückt werden. Dies wird durch die in der Figur 2 gezeigte Stellung der steuerbaren Wegeventile 2a und 4a gewährleistet (wie im Folgenden ausgeführt wird), wobei das steuerbare Wegeventil 2a Druckluftleitung 1 durchschaltet und die Druckluftleitung 4 sperrt und das steuerbare Wegeventil 4a die Druckluftleitung 3 durchschaltet und die Druckluftleitung 2 sperrt.

Im Folgenden wird die Druckmessung in einer der Luftfedern 6a bis 6d beispielhaft anhand der Luftfeder 6a erläutert. Zur Messung des Luftdruckes wird das steuerbare Wegeventil 26a von dem in der Figur 2 gezeigten Schaltzustand in den anderen Schaltzustand überführt, so dass die Luftfeder 6a über das steuerbare Wegeventil 26a mit dem Drucksensor 42 verbunden ist und mit dessen Hilfe der Luftdruck gemessen werden kann. Wenn hierbei der Luftdruck in der Luftfeder 6a größer ist als der Luftdruck in dem Druckluftbehälter 12, so kann trotzdem keine Druckluft von der Luftfeder 6a in den Druckluftbehälter 12 überströmen. Die Luft aus der Luftfeder 6a gelangt nämlich über die steuerbaren Wegeventile 26a und 4a und das Rückschlagventil 33 zu dem Rückschlagventil 31, das jedoch zu dem steuerbaren Wegeventil 2a hin sperrt. Somit gelangt die Druckluft nur bis zu dem Rückschlagventil 31, nicht jedoch bis zu dem steuerbaren Wegeventil 2a und dem Druckluftbehälter 12. Ein Überströmen von Druckluft aus der Luftfeder 6a in den Druckluftbehälter 12 über einen anderen Weg ist ebenfalls nicht möglich, da die Druckluftleitungen 2 und 4 durch die steuerbaren Wegeventile 4a und 2a unterbrochen sind.

Wenn hingegen der Luftdruck in dem Druckluftbehälter 12 größer ist als der Luftdruck in der Luftfeder 6a, so ist es ebenfalls nicht möglich, dass Druckluft von diesem in die Luftfeder 6a überströmt. In diesem Fall kann die Luft nämlich ausgehend von dem Druckluftbehälter 12 über das steuerbare Wegeventil 2a und das Rückschlagventil 31 nur bis zu dem Rückschlagventil 33 gelangen, das zum steuerbaren Wegeventil 4a und zur Luftfeder 6a hin sperrt. Ein Überströmen von Druckluft aus dem Druckluftbehälter 12 in die Luftfeder 6a über einen anderen Weg ist ebenfalls nicht möglich, da die Druckluftleitung 4 durch das Wegeventil 2a und die Druckluftleitung 2 durch das Wegeventil 4a unterbrochen ist.

Zur Beendigung der Druckmessung wird das steuerbare Wegeventil 26a wieder in den in der Figur 1 gezeigten Zustand überführt. Auf entsprechende Art und Weise wird der Luftdruck in den Luftfedern 6b bis 6d gemessen, wobei dann das entsprechende Wegeventil 26b bis 26d von dem in der Figur 2 gezeigten Schaltzustand in den anderen Schaltzustand überführt wird.

Figur 3 zeigt eine Niveauregelanlage, die weitestgehend der in der Figur 1 gezeigten Niveauregelanlage entspricht. Ein Unterschied ist darin zu sehen, dass die in der Figur 1 gezeigten schaltbaren Wegeventile 1a - 4a in zwei steuerbare Wegeventile 2a und 4a zusammengefasst sind. Die in der Figur 2 gezeigte Niveauregelanlage entspricht bezüglich ihres generellen Aufbaus der in der DE 199 59 556 C1 gezeigten Niveauregelanlage, so dass bezüglich des Auffüllens der Luftfedern 6a - 6d aus dem Druckluftvorratsbehälter 12 und des Überführens von Druckluft aus den Luftfedern 6a - 6d in den Druckluftvorratsbehälter 12 auf diese Druckschrift verwiesen wird. Die Niveauregelanlage enthält einen Lufttrockner 10, der in der vierten Druckluftleitung 4 angeordnet ist, über die der Kompressorausgang 16 über das Wegeventil 4a mit dem Druckluftvorratsbehälter 12 verbindbar ist (die Verbindung ist dann hergestellt, wenn das Wegeventil 4a von dem in der Figur 3 gezeigten Schaltzustand in seinen anderen Schaltzustand übergeht).

Ausgehend von dem Punkt 28 in Richtung der Luftfedern 6a - 6d ist die Niveauregelanlage gemäß Figur 3 genauso aufgebaut wie die Niveauregelanlage gemäß Figur 1, so dass diesbezüglich auf die obige Figurenbeschreibung verwiesen wird. Über das Ansaugventil 30 kann wie folgt Druckluft aus der Atmosphäre über den Kompressor 8 in den Druckluftbehälter 12 überführt werden: Zunächst wird von der (nicht gezeigten) Steuereinheit der Niveauregelanlage das Ventil 30, das Wegeventil 2a und das Wegeventil 4a angesteuert, so dass diese von dem in der Figur 3 gezeigten Schaltzustand in ihren anderen Schaltzustand übergehen. Daraufhin wird von der Steuereinheit der Kompressor 8 angesteuert, so dass Druckluft aus der Atmosphäre über das Ansaugventil 30, das Wegeventil 2a, den Kompressor 8, den Lufttrockner 10, das Rückschlagventil 18 und das Wegeventil 4a in den Druckluftvorratsbehälter 12 überführt wird. Zur Beendigung dieses Vorganges wird von der Steuereinheit wiederum der Kompressor 8 angesteuert, so dass dieser aufhört zu laufen und darüber hinaus wird das Ansaugventil 30 nicht mehr bestromt, so dass dieses wieder in den in der Figur 3 gezeigten Zustand übergeht und zur Atmosphäre hin sperrt.

Über das Ablassventil 44 kann zur Regeneration des Lufttrockners 10 Druckluft aus dem Druckluftvorratsbehälter 12 in die Atmosphäre abgelassen werden. Dazu verfügt die Niveauregelanlage über eine Druckluftleitung, die von der vierten Druckluftleitung 4 in einem Punkt 40 abzweigt, der zwischen dem Kompressorausgang 16 und dem Lufttrockner 10 liegt und die über ein Ablassventil 44 mit der Atmosphäre verbindbar ist. Die Entleerung des Druckluftvorratsbehälters 12 erfolgt wie folgt: Von der Steuereinheit der Niveauregelanlage werden die Wegeventile 44 und 4a angesteuert, so dass diese von dem in der Figur 3 gezeigten Schaltzustand in ihren anderen Schaltzustand übergehen. Der Druckluftvorratsbehälter 12 ist dann über das Wegeventil 4a, die Druckluftleitung mit der Drossel 22, den Lufttrockner 10 und das Ablassventil 44 mit der Atmosphäre verbunden. Zur Beendigung des Ablassvorganges wird von der Steuereinheit zumindest das Wegeventil 44 nicht mehr bestromt, so dass dieses wieder in den in der Figur 3 gezeigten Schaltzustand übergeht und zur Atmosphäre hin sperrt. Während des Ablassvorganges wird der Lufttrockner in der entgegengesetzten Richtung durchströmt wie während des Auffüllvorganges des Druckluftvorratsbehälters.

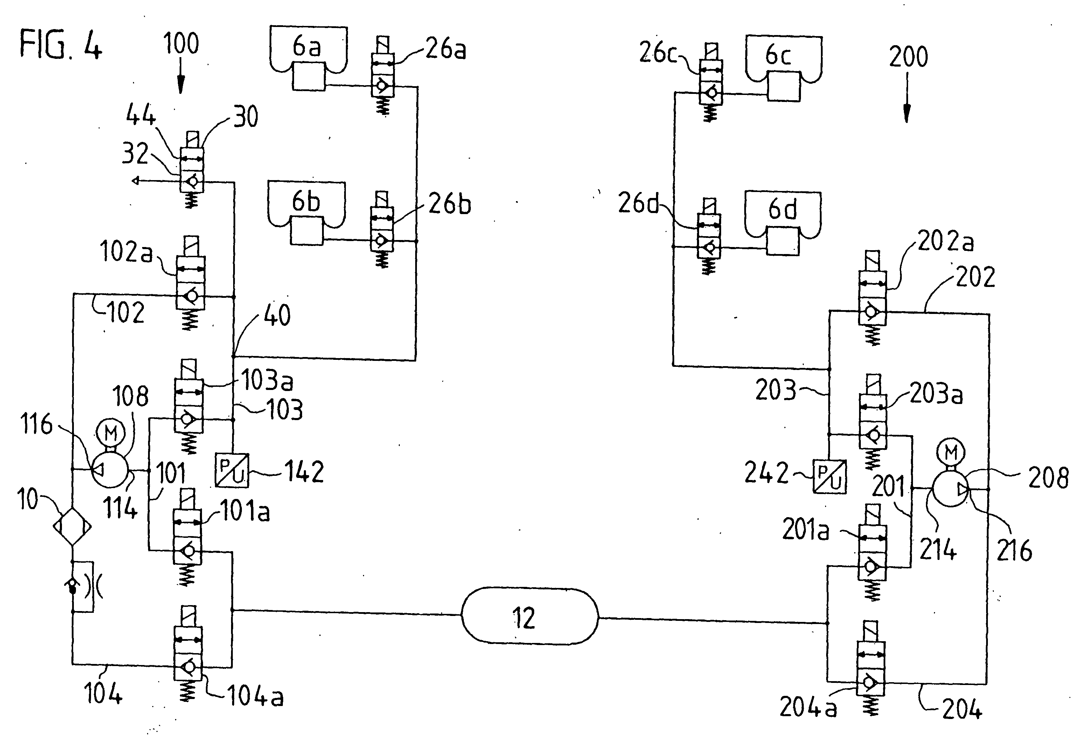

In den Figuren 4 bis 8 sind Ausführungsbeispiele der Erfindung dargestellt, durch die zusätzliche Funktionen der Niveauregelanlage ermöglicht werden. Grundlage sind dabei jedoch immer Anlagen, wie sie in Zusammenhang mit den Figuren 1 bis 3 beschrieben worden sind. In den Ausführungsbeispielen nach den Figuren 4 - 8 sind Niveauregelanlagen dargestellt, die ähnlich aufgebaut sind wie die im Zusammenhang mit Fig. 1 Beschriebene. Diese Weiterbildungen der Erfindung könnten aber auch in analoger Weise auf Niveauregelanlagen im Sinne von Fig. 2 und 3 aufgebaut sein. In den Figuren 4 bis 8 sind für Komponenten, die gegenüber Fig. 1 nicht verändert worden sind, die gleichen Bezugszeichen beibehalten.

Fig. 4 zeigt zwei Regelkreise 100 und 200, die beide gleichartig und in gleicher Weise wie bei Fig. 1 aufgebaut sind. Die Regelkreise 100 und 200 werden aus einem einzigen Druckmittelvorratsbehälter 12 gespeist. Durch einen der Regelkreise, z.B. 100, werden die zur Vorderachse des Fahrzeuges gehörenden Druckmittelkammern, z.B. 6a und 6b, und durch den anderen Regelkreis (in diesem Beispiel 200) die Druckmittelkammern (in diesem Beispiel 6c und 6d) mit Luft versorgt und gesteuert.

Beide Regelkreise 100 bzw. 200 haben Kompressoren 108 bzw. 208, deren Eingänge 114 bzw. 214 über Wegeventile 101a bzw. 201a und Druckluftleitungen 101 bzw. 201 mit dem Druckmittelvorratsbehälter 12 und über Wegeventile 103a bzw. 203a und Druckluftleitungen 103 bzw. 203 mit den Druckmittelkammern 6a und 6b bzw. 6c und 6d der jeweiligen Fahrzeugachsen in Verbindung stehen. Die Ausgänge 116 bzw. 216 der Kompressoren 100, 200 sind über Druckluftleitungen 102 bzw. 202 und Wegeventile 102a bzw. 202a mit den Druckmittelkammern 6a, 6b bzw. 6c, 6d und über Druckluftleitungen 104 bzw. 204 und Wegeventile 104a bzw. 204a mit dem Druckmittelvorratsbehälter 12 verbunden. Die Regelkreise 100 und 200 sind zudem mit Drucksensoren 142 und 242 ausgestattet.

In der Druckluftleitung 104 des Regelkreises 100 ist ein Lufttrockner 10 angeordnet, dem eine Drossel 22 und ein dazu paralleles Rückschlagventil 18 vorgeschaltet sind. Über eine Leitung 32, die mit einem Ventil 30 versehen ist, kann Luft aus der Umgebung aufgenommen oder in die Umgebung abgegeben werden. Die Wirkungsweise dieser Einrichtungen ist dieselbe wie bei Fig. 1. Diese Einrichtungen sind nur im Regelkreis 100, nicht jedoch im Regelkreis 200 vorgesehen. Dieses ist möglich, da zum einen die Regelreise 100 und 200 über den Druckmittelvorratsbehälter 12 miteinander in Verbindung stehen, und da zum anderen bei einer geschlossenen Niveauregelanlage ein Austausch mit der Umgebung in nur geringem Maße, vor allem zum Ausgleich von Leckageverlusten, stattfindet.

Die Anlage nach Fig. 4 stellt somit, abgesehen von den gemeinsam genutzten Komponenten zum Luftaustausch mit der Umgebung und dem gemeinsam genutzten Druckmittelvorratsbehälter 12, eine Verdoppelung der Anlage aus Fig. 1 dar. Dieser erhöhte Aufwand hat jedoch den Vorteil, dass nunmehr jeder Achse eines zweiachsigen Fahrzeuges eine eigene Einheit zur Luftversorgung und Drucksteuerung der Druckmittelkammern zur Verfügung steht, die jeweils über einen eigenen Kompressor verfügt. Jeder Kompressor 108, 208 hat daher nur noch zwei Druckmittelkammern zu versorgen anstatt vier wie bei der Anlage nach Fig. 1. Wenn beide Kompressoren 108, 208 gleichzeitig betrieben werden, kann daher bei einer Anlage gemäß Fig. 4 das Füllen und Entleeren der Druckmittelkammern mit doppelt so hoher Geschwindigkeit erfolgen wie bei einer Anlage gemäß Fig. 1. Darüber hinaus besteht bei einer Niveauregelanlage gemäß Fig. 4 die Möglichkeit, die Druckmittelkammern der einen Achse zu füllen und gleichzeitig die Druckmittelkammern der anderen Achse zu leeren. Durch ein solches Verschieben des Druckmittels zwischen den Achsen können Nickbewegungen des Fahrzeuges ausgeglichen werden. Die Niveauregelung gemäß Fig. 4 bietet somit die Möglichkeit, weitere Programme zur Fahrwerksregelung zu verwirklichen, ohne dass zusätzlicher technischer Aufwand wie eigens dafür vorgesehene Vorrichtungen, Ventile usw. benötigt werden.

Fig. 4 zeigt eine Niveauregelanlage für ein Fahrzeug mit zwei Achsen. Es versteht sich, dass für ein Fahrzeug mit mehr als zwei Achsen den Regelkreisen 100 und 200 noch weitere gleichartige Regelkreise parallel geschaltet werden können, so dass jeder Achse ein eigener Regelkreis mit Kompressor zugeordnet ist.

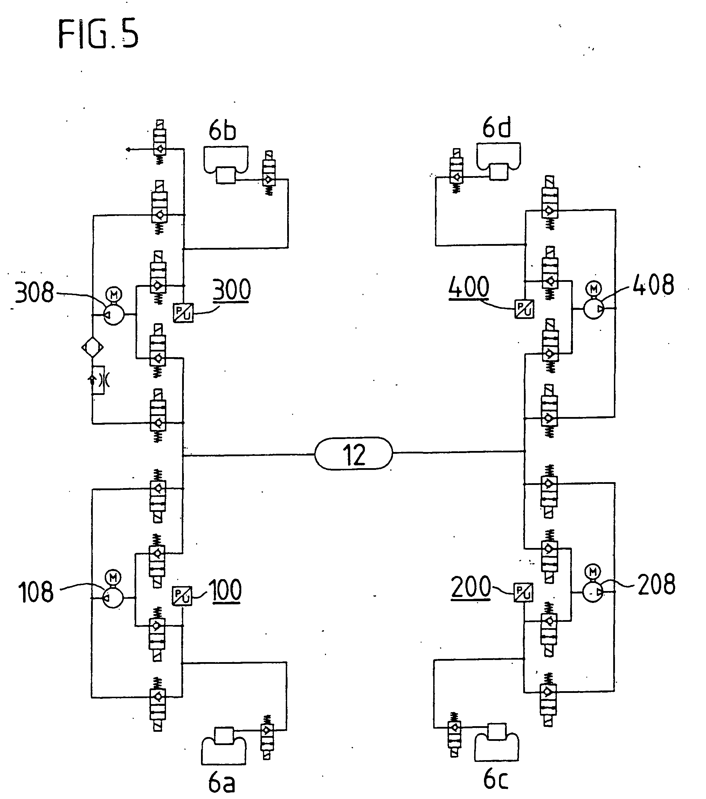

Der Gedanke, einzelnen Fahrwerkskomponenten jeweils einen eigenen Kompressor zuzuordnen, ist bei der in Fig. 5 gezeigten Niveauregelanlage noch weiter geführt , indem nunmehr jeder Druckmittelkammer 6a - 6d ein eigener Regelkreis 100, 200, 300 und 400 zugeordnet ist, wobei die Regelkreise 100, 200, 300, 400 wiederum in der vorgehend beschriebenen Weise aufgebaut sind und jeweils eigene Kompressoren 108, 208, 308 und 408 aufweisen. Damit kann jede zu je einem Fahrzeugrad gehörende Druckmittelkammer 6a-6d individuell und unabhängig von den anderen Druckmittelkammern befüllt oder entleert werden. Es sind noch schnellere Druckänderungen in den Druckmittelkammern und eine noch bessere Regelung des Fahrwerkes möglich als bei den bisher beschriebenen Ausführungsbeispielen der Erfindung. Bei gleichzeitigem, parallelem Betrieb aller Regelkreise entweder zum Erhöhen oder zum Absenken des Druckes in den Druckmittelkammern können Niveauänderungen des Fahrzeuges in einem Viertel der Zeit durchgeführt werden, die bei einer vergleichbaren Anlage mit nur einem einzigen Kompressor benötigt würde. Durch gleichzeitigen Betrieb der Regelkreise 100, 200, 300 und 400 können zudem weitere Programme zur Fahrwerksregelung, z.B. zum Ausgleich von Nick- und Wankbewegungen , verwirklicht werden, ohne dass zusätzliche Vorrichtungen benötigt werden.

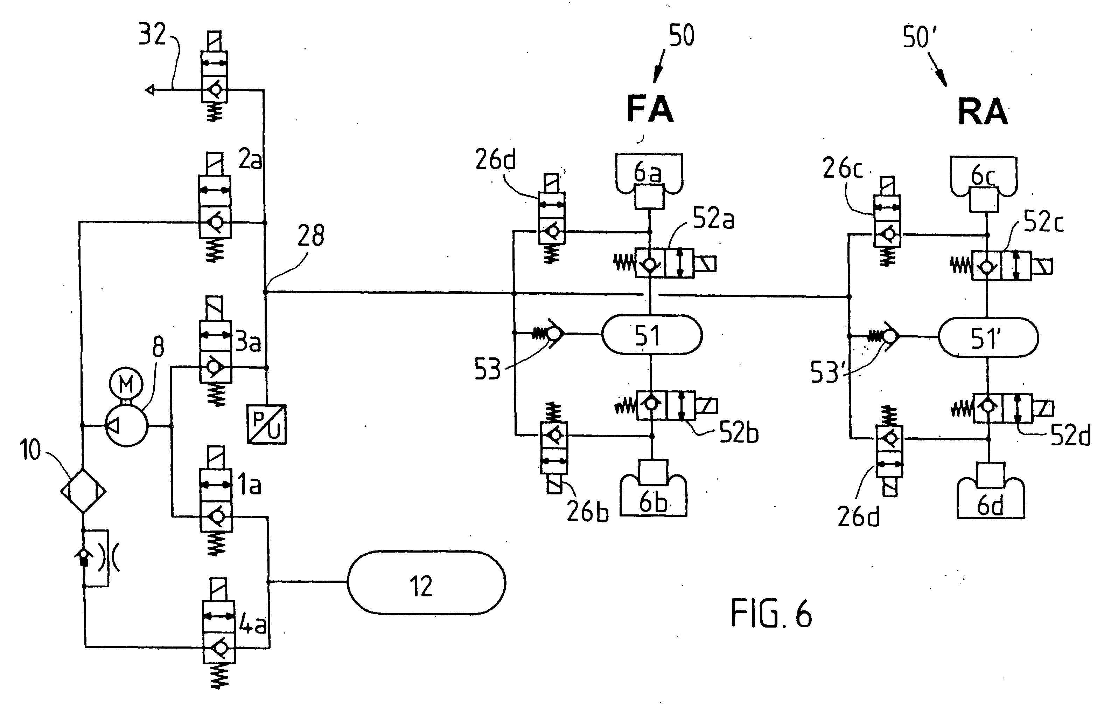

Die in Fig. 6 dargestellte Niveauregelanlage verfügt über einen Regelkreis von der Art des in Verbindung mit Fig. 1 beschriebenen. Bei dieser Niveauregelanlage sind die zur Vorder- bzw. zur Hinterachse gehörenden Druckmittelkammern jeweils zu Gruppen 50, 51' zusammengefasst. Ein mit mehr als zwei Achsen würden entsprechend mehr derartige Gruppen aufweisen. Zu jeder Gruppe gehört ein Druckmitelspeicher 51, 51'. Die Druckmittelspeicher 51, 51 stehen über Wegeventile 52a- 52d mit den jeweiligen Druckmittelkammern 6a - 6d und über Rückschlagventile 53 und 53' mit dem Punkt 28 der Versorgungseinheit in Verbindung. Die Ventile 52a - 52d sind vorzugsweise so ausgebildet, dass sie große Strömungsquerschnitte freigeben können. Die Rückschlagventile 53 und 53'sperren, ausgehend vom Punkt 28, in Richtung zu den Druckmittelspeichern 51, 51'. Den Druckmittelkammern 6a-6d sind ferner Wegeventile 26a - 26d vorgeschaltet, die in Zusammenhang mit Fig. 1 bereits beschrieben worden sind.

Den Druckmittelkammern 6a - 6d kann somit entweder über die Ventile 26a - 26d und den Kompressor 8 aus dem Druckmittelvorratsbehälter 12 oder über die Ventile 52a - 52c aus den Druckmittelspeichern 51 bzw. 51' Luft zugeführt werden. Das Ablassen von Luft aus den Druckmittelkammern 6a - 6d kann in der bereits in Verbindung mit Fig. 1 beschriebenen Weise über die Ventile 26a - 26d in den Vorratsbehälter 12 erfolgen. Dabei müssen lange Leitungssysteme mit mehreren Ventilen sowie der Lufttrockner durchströmt werden, was die Strömungsgeschwindigkeit beeinträchtigt. Das Ablassen der Luft kann aber auch über die Ventile 52a - 52d in die Speicher 51 bzw. 51' erfolgen, was wegen der kurzen Leitungen und bei genügend großen Querschnitten der Ventile 52a - 52d sehr schnell von statten gehen kann. Somit ist ein rasches Absenken des Fahrzeuges möglich.

Die Luft aus den Speichern 51, 51' gelangt über die Rückschlagventile 53, 53' und den Kompressor 8 ebenfalls zum Vorratsbehälter 12, wobei dieses Abströmen langsam erfolgen kann, ohne dass Bewegungen des Fahrzeuges davon betroffen sind. Die Speicher 51, 51'dienen somit als Zwischenspeicher oder Puffer, die größere Mengen von Luft schnell aufnehmen können, um sie dann nach und nach an die langsamer arbeitenden Teile der Anlage abzugeben. Die Rückschlagventile 53, 53'verhindern, dass bei einem Auffüllen der Druckmittelkammern 6a - 6d durch den Kompressor 8 Luft in die Speicher 51, 51' gelangt. Eine derartige Druckerhöhung in den Speichern wäre nicht nur eine unnötige Verschwendung von Energie, sondern sie würde sogar die Funktion der Anlage beeinträchtigen. Um ein schnelles Entleeren der Druckmittelkammern 6a - 6d nach Öffnen der Ventile 52a bis 52d in die Speicher 51, 51' zu erzielen, muß der Druck in den Speichern 51, 51' möglichst gering, auf alle Fälle jedoch geringer als in den jeweiligen Druckmittelkammern sein.

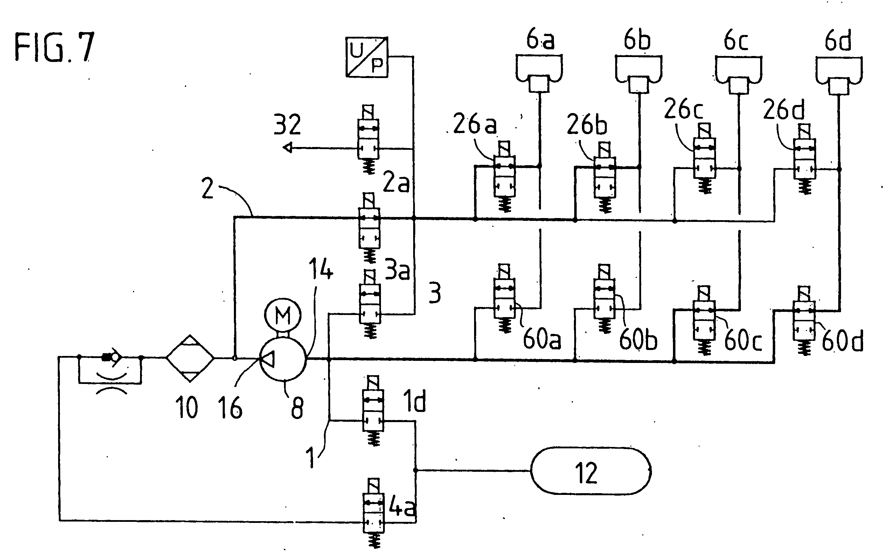

Fig. 7 zeigt eine Niveauregelanlage mit zusätzlichen Einrichtungen für eine Regelung zum Ausgleich von Nickbewegungen. Als Nickbewegungen werden Bewegungen des Fahrzeuges um eine Achse quer zur Fahrtrichtung bezeichnet. Solche Bewegungen treten z.B. beim Anfahren oder Bremsen auf. In Fig. 7 sind die Einrichtungen zum Nickausgleich in Verbindung mit einer Anlage in der Art von Fig. 1 dargestellten. Diese Einrichtungen könnten aber auch in Verbindung mit einer anderen Ausführungsform der Erfindung verwendet werden.

Die Druckmittelkammern 6a - 6d sind über Ventile 26a - 26d einzeln ansteuerbar und über das Ventil 2a und die Leitung 2 mit dem Kompressorausgang 16 sowie über das Ventil 3a und die Leitung 3 mit dem Kompressoreingang 14 verbunden. Zusätzlich sind weitere schaltbare Wegeventile 60a - 60d vorgesehen, die jeweils den einzelnen Druckmittelkammern 6a bis 6d vorgeschaltet und mit der ersten bzw. dritten Druckmittelleitung 1 bzw. 3 verbunden sind. Über die Druckmittelleitungen 1 bzw. 3 besteht eine direkte Verbindung mit dem Kompressoreingang. Mit Hilfe dieser Ventile können Druckmittelkammern untereinander Druckmittel austauschen.

Durch eine geeignete Steuerung der Ventile 26a - 26d, 60a - 60d sowie 2a und 3a kann eine Regelung zum Nickausgleich erfolgen, indem über den Kompressor der Druck in den Druckmittelkammern der einzelnen Achse entsprechend verringert oder erhöht wird. Wenn z.B. die Vorderachse über die Druckmittelkammern 6a und 6b und die Hinterachse über die Druckmittelkammern 6c und 6d abgefedert wird und das Fahrzeug z.B. beim Bremsen die Tendenz hat, vorne abzusinken und hinten in die Höhe zu gehen, werden die Ventile 60c, 60d, 2a, 26a und 26b durchgeschaltet und durch den Kompressor 8 Luft von der Druckmittelkammern der Hinterachse 6c, d zu denen der Vorderachse 6a, 6b befördert, um die Nickbewegung auszugleichen. Wenn in einer umgekehrten Bewegung z.B. beim Anfahren das Vorderteil des Fahrzeuges nach oben und das Heck nach unten gehen will, werden die Ventile 60a, 60b, 3a, 26c und 26d geöffnet und Luft durch den Kompressor 8 von der Vorderachse zur Hinterachse befördert. Der Kompressor 8 wird, während er in Betrieb ist, stets in der gleichen Richtung durchströmt.

In analoger Weise wie der Nickausgleich könnte mit der Niveauregelanlage nach Fig. 7 auch ein Wankausgleich verwirklicht werden, d.h. ein Ausgleich von Drehbewegungen des Fahrzeuges um seine Längsachse, indem Druckmittel zwischen den auf der linken und auf der rechten Seite des Fahrzeuges liegenden Druckmittelkammern ausgetauscht wird.

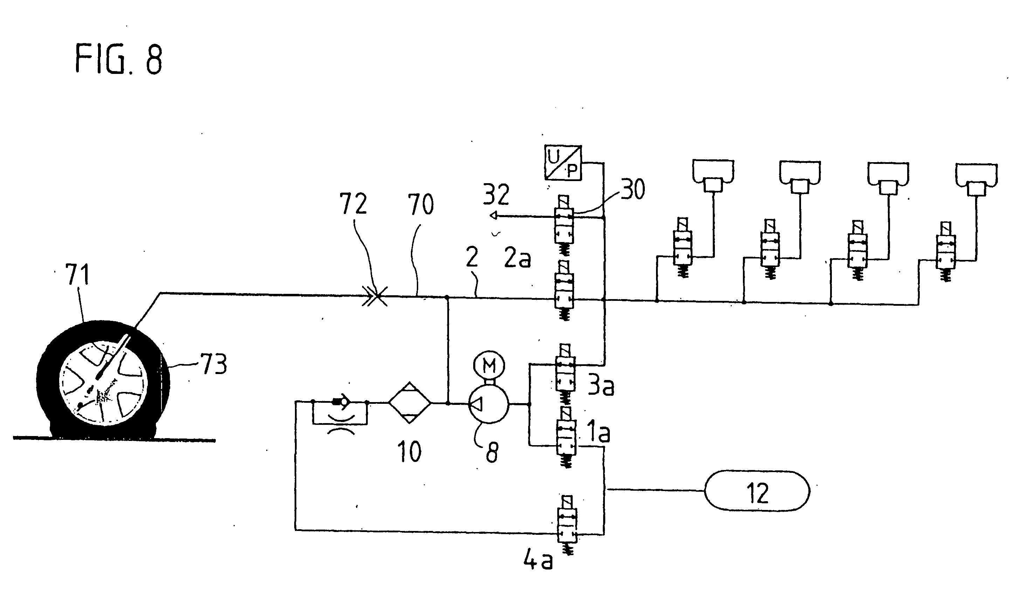

Fig. 8 zeigt eine Niveauregelanlage, die einen Druckmittelanschluss 72 für externe Geräte und Einrichtungen aufweist. Es ist wiederum eine Anlage in der Art von Fig. 1 dargestellt. Der Druckmittelanschluss 72 kann jedoch bei allen erfindungsgemäßen Niveauregelanlagen Verwendung finden.

Die zu dem Druckmittelanschluss 72 führende Druckmittelleitung 70 zweigt von der Druckmittelleitung 2 ab. Der Druckmittelanschluss 72 hat einen Verschluß, der nur dann geöffnet ist, wenn ein externes Gerät angeschlossen ist, so dass keine Luft aus der Anlage entweichen kann bzw. der Benutzer von der Aufgabe entlastet wird, die Leitung durch z.B.Betätigen eines Hahnes zu schließen..

Die externe Einrichtung ist in Fig. 8 ein Reifenfüllanschluss 71, über den ein Reifen 73 aufgepumpt werden kann. Der Reifenfüllanschluss 71 ist mit einem Ventil versehen, das nur dann öffnet, wenn der Reifenfüllanschluss 71 mit einem Reifen 73 verbunden ist. Zum Füllen des Reifens 73 werden das Ansaugventil 30 und das Ventil 3a geöffnet und der Kompressor 8 eingeschaltet. Es wird somit Luft aus der Umgebung in den Reifen 73 gefördert. Der Lufttrockner 10 wird dabei nicht durchströmt, da für die Befüllung des Reifens keine trockene Luft benötigt wird. Eine unnötige Belastung des Trockners und eine Behinderung der Strömung können somit vermieden werden.

Die Ausführungsform der Erfindung nach Fig. 8 macht somit bestimmte Komponenten der Niveauregelanlage für zusätzliche Zwecke nutzbar, ohne dass dadurch die Hauptfunktionen der Niveauregelanlage in irgendeiner Weise beeinträchtigt wären.

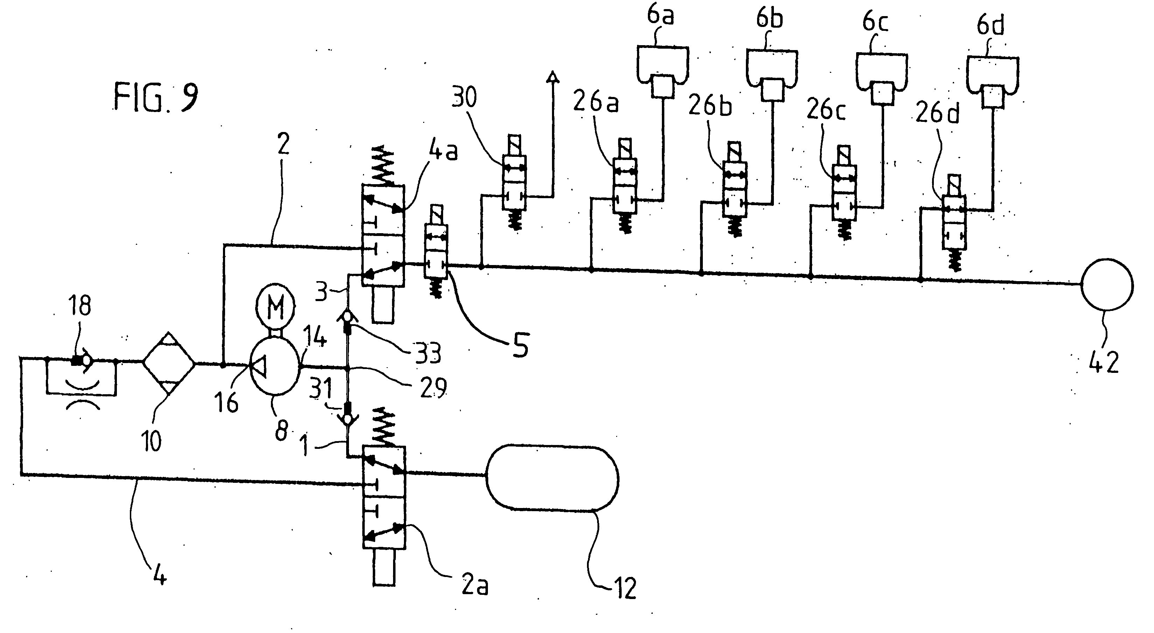

Die Ausführungsform der Figur 9 zeigt eine Niveauregelanlage, die weitestgehend der in der Figur 2 gezeigten Niveauregelanlage entspricht. Bei der Niveauregelanlage gemäß Figur 9 ist gegenüber der in Figur 2 gezeigten ein weiters steuerbares Wegeventile 5 in der Druckluftleitung 3 zwischen dem steuerbaren Wegeventil 4a und den Luftfedern 6a-6d angeordnet. Somit ist bei geschlossenem Wegeventil 5 eine Druckmessung mit dem Drucksensor 42 in den Luftfedern 6a-6d ohne einen Luftaustausch und damit Druckausgleich zwischen der jeweiligen Luftfeder 6a-6d und dem Lufttrockner 10 und/oder dem Kompressor 8 möglich. Die Befüllung oder Entleerung der Luftfedern 6a-6d oder die Verbindung des Kompressorsausganges 8 oder Kompressorseinganges 14 und/oder Lufttrockners 10 zur Atmosphäre über das steuerbare Wegeventil 30 werden durch das dann geschaltete Wegeventil 5 nicht beeinflusst. Es ist auch möglich die Schaltfunktion des steuerbaren Wegeventiles 5 umzukehren, und beispielsweise bei der Druckmessung das steuerbare Wegeventil 5 zu schalten und bei weiteren Funktionen nicht zu schalten.

### Bezugszeichenliste (ist Teil der Beschreibung)

- 1: erste Druckluftleitung
- 2: zweite Druckluftleitung
- 3: dritte Druckluftleitung
- 4: vierte Druckluftleitung
- 1a-4a: steuerbares Wegeventil
- 5: steuerbares Wegeventil
- 6a-6d: Luftfeder
- 8: Kompressor
- 10: Lufttrockner
- 12: Druckluftvorratsbehälter
- 14: Kompressoreingang
- 16: Kompressorausgang
- 18: Rückschlagventil
- 20: Druckluftleitung
- 22: Drossel
- 24: Punkt
- 26a-26d: steuerbares Wegeventil
- 28: Punkt
- 29: Punkt
- 30: Ansaugventil
- 31: Rückschlagventil
- 32: Druckluftleitung
- 33: Rückschlagventil
- 34: Druckluftleitung
- 36: Punkt
- 38a-38d: Abzweigung
- 40: Punkt
- 42: Drucksensor
- 44: Ablassventil
- 46: Druckluftleitung
- 48a-48d: Druckluftleitung
- 50, 50': Achsgruppen
- 51, 51': Druckmittelspeicher
- 52, 52': schaltbare Wegeventile
- 53, 53': Rückschlagventile
- 60a-60d: schaltbare Wegeventile
- 70: Leitung für externen Anschluß
- 71: Reifenfüllgerät
- 72: Anschluß für externe Geräte
- 73: Reifen
- 100, 200: Regelkreise
- 101-104,201-204: Druckluftleitungen
- 101a-104a, 201a-204a: Wegeventile
- 108, 208: Kompressoren
- 114, 214: Kompressoreingänge
- 116, 216: Kompressorausgänge
- 142, 242: Drucksensoren
- 300, 400: Regelkreise
- 308,408: Kompressoren

## Patentansprüche

1. Geschlossene Niveauregelanlage für Fahrzeuge, durch die ein Fahrzeugaufbau gegenüber mindestens einer Fahrzeugachse abgefedert ist, die folgende Bestandteile enthält:
- Druckmittelkammern (6a - 6d)
- einen Kompressor (8)
- einem Lufttrockner (10)
- einen Druckmittelvorratsbehälter (12), der über den Kompressor (8) mit den Druckmittelkammern (6a - 6d) derart in Verbindung steht, dass
- Druckmittel aus dem Druckmittelvorratsbehälter (12) über den Kompressor (8) in jede Druckmittelkammer (6a - 6d) überführbar ist, wobei der Kompressoreingang (14) dann über eine erste mit einem Wegeventil (1a) durchgeschaltete Druckluftleitung (1) mit dem Druckmittelvorratsbehälter (12) und der Kompressorausgang (16) dann über eine zweite mit einem Wegeventil (2a) durchgeschaltete Druckluftleitung mit der Druckmittelkammer (6a - 6d) verbunden ist,
- Druckmittel aus jeder Druckmittelkammer (6a - 6d) über den Kompressor (8) in den Druckmittelvorratsbehälter (12) überführbar ist, wobei der Kompressoreingang (14) dann über eine dritte mit einem Wegeventil (3a) durchgeschaltete Druckluftleitung (3) mit der Druckmittelkammer (6a - 6d) und der Kompressorausgang (16) dann über eine vierte mit einem Wegeventil (4a) durchgeschaltete Druckluftleitung (4) mit dem Druckmittelvorratsbehälter (12) verbunden ist, und
- eine Ansaugleitung vorhanden ist, die in einem Ansaugventil (30) endet und über die der Kompressoreingang (14) mit der Atmosphäre verbindbar ist,
**dadurch gekennzeichnet, dass**
- der Lufttrockner (10) in der vierten Druckluftleitung (4) angeordnet ist,
- eine Ablassleitung vorhanden ist, die von der vierten Druckluftleitung (4) in einem Punkt (40) abzweigt, der zwischen dem Kompressorausgang (16) und dem Lufttrockner (10) liegt, und die in einem Ablassventil (44) endet, so dass der Druckmittelvorratsbehälter (12) über den Lufttrockner (10) und über die Ablassleitung mit der Atmosphäre verbindbar ist.

2. Geschlossene Niveauregelanlage nach Anspruch 1, **dadurch gekennzeichnet, dass**
- in jeder der vier Druckluftleitungen (1 - 4) jeweils mindestens ein separates Wegeventil (1a- 4a) angeordnet ist, das die jeweilige Druckluftleitung (1 - 4) in einem ersten Schaltzustand durchgeschaltet und in einem zweiten Schaltzustand sperrt, wobei
- die erste und die vierte Druckluftleitung (1,4) zwischen den ihnen zugeordneten Wegeventilen (1a, 4a) und dem Druckmittelvorratsbehälter (12) in einem Punkt (24) zusammengeführt und von dort aus in einer ersten gemeinsamen Druckluftleitung (46) zu dem Druckmittelvorratsbehälter (12) geführt werden, und
- die zweite und die dritte Druckluftleitung (2, 3) zwischen den ihnen zugeordneten Wegeventilen und den Druckmittelkammern (6a - 6d) in einem Punkt (28) zusammengeführt und von dort aus in einer zweiten gemeinsamen Druckluftleitung (34) zu den Druckmittelkammern (6a - 6d) geführt werden.

3. Geschlossene Niveauregelanlage nach Anspruch 1, **dadurch gekennzeichnet, dass**
- die Niveauregelanlage zumindest zwei steuerbare Wegeventile (2a, 4a) aufweist, von denen jedes zumindest zwei Schaltzustände einnehmen kann, und dass
- die erste Druckluftleitung (1) mit dem ersten steuerbaren Wegeventil (2a) und die zweite Druckluftleitung (2) mit dem zweiten steuerbaren Wegeventil (4a) durchgeschaltet und die vierte Druckluftleitung (4) mit dem ersten steuerbaren Wegeventil (2a) und die dritte Druckluftleitung (3) mit dem zweiten steuerbaren Wegeventil (4a) gesperrt wird, wenn Druckluft von dem Druckmittelvorratbehälter (12) in eine Druckmittelkammer (6a-6d) überführt werden soll, wobei sich beide steuerbaren Wegeventile (2a, 4a) dann in einem ersten Schaltzustand befinden, und dass
- die dritte Druckluftleitung (3) mit dem zweiten steuerbaren Wegeventil (4a) und die vierte Druckluftleitung (4) mit dem ersten steuerbaren Wegeventil (2a) durchgeschaltet und die erste Druckluftleitung (1) mit dem ersten steuerbaren Wegeventil (2a) und die zweite Druckluftleitung (2) mit dem zweiten steuerbaren Wegeventil (4a) gesperrt wird, wenn Druckluft von einer Druckmittelkammer (6a-6d) in den Druckmittelvorratbehälter (12) überführt werden soll, wobei sich beide steuerbaren Wegeventile (2a, 4a) dann in einem zweiten Schaltzustand befinden.

4. Geschlossene Niveauregelanlage nach einem der Ansprüche 2 bis 3, **dadurch gekennzeichnet, dass** die erste Druckluftleitung (1), ausgehend von dem Druckmittelvorratbehälter (12), und die dritte Druckluftleitung, ausgehend von den Druckmittelkammern (6a-6d), in einem gemeinsamen Punkt (29), der unmittelbar mit dem Kompressoreingang (14) verbunden ist, enden.

5. Geschlossene Niveauregelanlage nach Anspruch 4, **dadurch gekennzeichnet, dass**
- in der ersten Druckluftleitung (1) zwischen dem gemeinsamen Punkt (29) und dem steuerbaren Wegeventil, mit dem die erste Druckluftleitung (1) durchschaltbar ist, ein zum Kompressoreingang (14) hin öffnendes Rückschlagventil (31) liegt, und dass
- in der dritten Druckluftleitung (3) zwischen dem gemeinsamen Punkt (29) und dem steuerbaren Wegeventil, mit dem die dritte Druckluftleitung (3) durchschaltbar ist, ein weiteres zum Kompressoreingang (14) hin öffnendes Rückschlagventil (33) liegt.

6. Geschlossene Niveauregelanlage nach einem der Ansprüche 3 bis 5, **dadurch gekennzeichnet, dass** die Niveauregelanlage in der dritten Druckluftleitung (3) zwischen dem steuerbaren Wegeventil (4a) und den Luftfedern (6a-6d) ein weiteres steuerbares Wegeventil (5) aufweist, das in einem ersten Schaltzustand die dritte Druckluftleitung (3) sperrt und in einem zweiten Schaltzustand die dritte Druckluftleitung (3) durchschaltet.

7. Geschlossene Niveauregelanlage nach einem der Ansprüche 1 bis 6, **dadurch gekennzeichnet, dass** die Ablassleitung mit der Ansaugleitung verbunden ist, wobei zwischen dem Punkt (40), in dem die Ablassleitung von der vierten Druckluftleitung (4) abzweigt und dem Punkt (28), in dem sie mit der Ansaugleitung verbunden ist, ein Wegeventil (2a) angeordnet ist, das in einem ersten Schaltzustand die Ablassleitung sperrt und in einem zweiten Schaltzustand die Ablassleitung durchschaltet, so dass das Ansaugventil (30) gleichzeitig als Ablassventil (44) genutzt werden kann.

8. Geschlossene Niveauregelanlage nach Anspruch 7, **dadurch gekennzeichnet, dass** das Ansaugventil (30) in einer Druckluftleitung (32) liegt, die von der zweiten gemeinsamen Druckluftleitung (34) abzweigt.

9. Geschlossene Niveauregelanlage nach einem der Ansprüche 7 bis 8, **dadurch gekennzeichnet, dass** die Ablassleitung zwischen dem Punkt (40), in dem sie von der vierten Druckluftleitung (4) abzweigt und dem Punkt (28), in dem sie mit der Ansaugleitung verbunden ist, mit der zweiten Druckluftleitung (2) übereinstimmt.

10. Geschlossene Niveauregelanlage nach Anspruch 1, **dadurch gekennzeichnet, dass**
- die Niveauregelanlage zumindest zwei steuerbare Wegeventile (2a, 4a) aufweist, von denen jedes zumindest zwei Schaltzustände einnehmen kann, und dass
- die erste Druckluftleitung (1) mit dem ersten steuerbaren Wegeventil (2a) und die zweite Druckluftleitung (2) mit dem zweiten steuerbaren Wegeventil (4a) durchgeschaltet wird, wenn Druckluft von dem Druckmittelvorratsbehälter (12) in eine Druckmittelkammer (6a - 6d) überführt werden soll, wobei sich beide steuerbaren Wegeventile (2a, 4a) dann in einem ersten Schaltzustand befinden, und dass
- die dritte Druckluftleitung (3) mit dem ersten steuerbaren Wegeventil (2a) und die vierte Druckluftleitung (4) mit dem zweiten steuerbaren Wegeventil (4a) durchgeschaltet wird, wenn Druckluft von einer Druckmittelkammer (6a - 6d) in den Druckmittelvorratsbehälter (12) überführt werden soll, wobei sich beide steuerbaren Wegeventile (2a, 4a) dann in einem zweiten Schaltzustand befinden.

11. Geschlossene Niveauregelanlage nach einem der Ansprüche 1 bis 10, **dadurch gekennzeichnet, dass** in der vierten Druckluftleitung (4) zwischen dem Lufttrockner (10) und dem Druckmittelvorratsbehälter (12) ein zum Druckmittelvorratsbehälter (12) hin öffnendes Rückschlagventil (18) angeordnet ist, das von einer Druckluftleitung (20), in der eine Drossel (22) angeordnet ist, überbrückt wird.

12. Geschlossene Niveauregelanlage nach einem der Ansprüche 1 bis 11, **dadurch gekennzeichnet, dass** die Niveauregelanlage einen Drucksensor (42) aufweist, der in einer von den Druckmittelkammern (6a - 6d) ausgehenden Druckluftleitung angeordnet ist und dass sich zwischen jeder Druckmittelkammer (6a - 6d) und dem Drucksensor jeweils ein steuerbares Wegeventil (26a - 26d) befindet, das in einem ersten Schaltzustand die ihm zugeordnete Druckmittelkammer (6a - 6d) von dem Drucksensor (42) trennt und in einem zweiten Schaltzustand diese Druckmittelkammer (6a - 6d) mit dem Drucksensor (42) verbindet.

13. Geschlossene Niveauregelanlage nach einem der Ansprüche 1 bis 12, **dadurch gekennzeichnet, dass** die Niveauregelanlage zwei oder mehr Kompressoren (108, 208, 308, 408) aufweist, wobei die Druckmittelkammern (6a- 6d) jeweils einem der Kompressoren (108, 208, 308, 408) zugeordnet sind, und wobei
- Druckmittel aus dem Druckmittelvorratsbehälter (12) über jeweils einen der Kompressoren (108, 208, 308, 408) in jede der diesem Kompressor (108, 208, 308, 408) zugeordneten Druckmittelkammem (6a - 6d) überführbar ist, wobei der jeweilige Kompressoreingang (114, 214) dann über eine erste mit einem Wegeventil (101a, 201 a) durchgeschaltete Druckluftleitung (101, 201) mit dem Druckmittelvorratsbehälter (12) und der jeweilige Kompressorausgang (116, 216) dann über eine zweite mit einem Wegeventil (102a, 202a) durchgeschaltete Druckluftleitung (102, 202) mit der dem Kompressor (108, 208, 308, 408) zugeordneten Druckmittelkammer (6a - 6d) verbunden ist, und
- Druckmittel aus jeder Druckmittelkammer (6a - 6d) über jeweils einen der Kompressoren (108, 208) in den Druckmittelvorratsbehälter (12) überführbar ist, wobei der jeweilige Kompressoreingang (114, 214) dann über eine dritte mit einem Wegeventil (103a, 203a) durchgeschaltete Druckluftleitung (103, 203) mit den zugeordneten Druckmittelkammern (6a - 6d) und der jeweilige Kompressorausgang (116, 216) dann über eine vierte mit einem Wegeventil (104a, 204a) durchgeschaltete Druckluftleitung (104, 204) mit dem Druckmittelvorratsbehälter (12) verbunden ist, und wobei
- ein Lufttrockner (10) in der vierten Druckluftleitung (104) bei einem der Kompressoren (108) angeordnet ist,
- eine Ansaugleitung vorhanden ist, die in einem Ansaugventil (30) endet und über die der Eingang (114) eines der Kompressoren (104) mit der Atmosphäre verbindbar ist,
- eine Ablassleitung vorhanden ist, die von der vierten Druckluftleitung (104) in einem Punkt (40) abzweigt, der zwischen dem Ausgang (116) eines der Kompressoren (108) und dem Lufttrockner (10) liegt, und die in einem Ablassventil (44) endet, so dass der Druckmittelvorratsbehälter (12) über den Lufttrockner (10) und über die Ablassleitung mit der Atmosphäre verbindbar ist.

14. Geschlossene Niveauregelanlage nach Anspruch 13 für ein Fahrzeug mit zwei oder mehreren Achsen, **dadurch gekennzeichnet, dass** die Kompressoren (108, 208) jeweils den Druckmittelkammern (6a, 6b und 6c, 6d) einer Achse zugeordnet sind.

15. Geschlossene Niveauregelanlage nach Anspruch 13, **dadurch gekennzeichnet, dass** jeder der Druckmittelkammern (6a, - 6d) jeweils ein eigener Kompressor (108, 208, 308, 408) zugeordnet ist.

16. Geschlossene Niveauregelanlage nach Anspruch 13, **dadurch gekennzeichnet, dass** sie genau einen Lufttrockner (10), eine Ansaugleitung mit Ansaugventil (30) und eine Ablassleitung mit Ablassventil (44) aufweist.

17. Geschlossene Niveauregelanlage nach einem der Ansprüche 1 bis 12, **dadurch gekennzeichnet, dass** die Druckmittelkammern (6a, 6b und 6c, 6d) einer Fahrzeugachse zu Gruppen (50, 50') zusammengefaßt sind und jeder Gruppe (50, 50') ein Druckmittelvorratsbehälter (51, 51') zugeordnet ist, der mit den zum Kompressoreingang (14) und Kompressorausgang (16) führenden Druckmittelleitungen (4, 3) und über Wegeventile (52a-52d) mit den Druckmittelkammern (6a-6d) verbunden ist.

18. Geschlossene Niveauregelanlage nach Anspruch 16, **dadurch gekennzeichnet, dass** die Druckmittelvorratsbehälter (51a, 51b)über Rückschlagventile (53a, 53b) mit den zum Kompressoreingang (14) und Kompressorausgang (16) führenden Druckmittelleitungen (3, 4) verbunden sind, wobei die Rückschlagventile (53a, 53b) in Strömungsrichtung zu den Druckmittelvorratsbehältern (51 a, 51b) hin sperren, und wobei vorzugsweise jedem Druckmittelvorratsbehälter ein Rückschlagventil (53a,53b) zugeordnet ist.

19. Geschlossene Niveauregelanlage nach Anspruch einem der Ansprüche 1 - 18, **dadurch gekennzeichnet, dass** den Druckmittelkammern (6a-6d) jeweils ein Wegeventil (60a-60d) zugeordnet ist, wobei die Druckmittelkammern (6a-6d) über diese Wegeventile (60a-60d) jeweils mit der ersten bzw. dritten Druckmittelleitung (1 bzw. 3) verbunden sind.

20. Geschlossene Niveauregelanlage nach einem der Ansprüche 1 bis 19, **gekennzeichnet, durch** eine mit den Druckmittelleitungen der Niveauregelanlage verbundene, zum Anschluß externer Geräte geeigneter Leitung (70).

21. Geschlossene Niveauregelanlage nach Anspruch 20 **dadurch gekennzeichnet, dass** die nach außen führende Leitung ein Ventil aufweist, das nur dann öffnet, wenn ein externes Gerät an die Leitung angeschlossen ist.

22. Geschlossene Niveauregelanlage nach Anspruch 20 **dadurch gekennzeichnet, dass** das externe Gerät eine Reifenfüllvorrichtung (71) ist.

23. Geschlossene Niveauregelanlage nach Anspruch 20 **dadurch gekennzeichnet, dass** die nach außen führende Leitung (70) an die mit dem Kompressorausgang (16) verbundene Druckluftleitung (2) angeschlossen ist.

## Claims

1. Closed height control device for vehicles, by means of which a vehicle body is cushioned with respect to at least one vehicle axle, the device containing the following parts:
- pressure-medium chambers (6a-6d)
- a compressor (8)
- an air dryer (10)
- a pressure-medium storage container (12) which is connected via the compressor (8) to the pressure-medium chambers (6a-6d) in such a manner that
- pressure medium can be transferred from the pressure-medium storage container (12) via the compressor (8) into each pressure-medium chamber (6a-6d), the compressor inlet (14) then being connected via a first compressed-air line (1), which is connected by a directional control valve (1a), to the pressure-medium storage container (12) and the compressor outlet (16) then being connected via a second compressed-air line, which is connected by a directional control valve (2a), to the pressure-medium chamber (6a-6d),
- pressure medium can be transferred from each pressure-medium chamber (6a-6d) via the compressor (8) into the pressure-medium storage container (12), the compressor inlet (14) then being connected via a third compressed-air line (3), which is connected by a directional control valve (3a), to the pressure-medium chamber (6a-6d) and the compressor outlet (16) then being connected via a fourth compressed-air line (4), which is connected by a directional control valve (4a), to the pressure-medium storage container (12), and
- there is an intake line which ends in an intake valve (30) and via which the compressor inlet (14) can be connected to the atmosphere,
**characterized in that**
- the air dryer (10) is arranged in the fourth compressed-air line (4),
- there is a discharge line which branches off from the fourth compressed air line (4) at a point situated between the compressor outlet (16) and the air dryer (10), and which ends in a discharge valve (44), so that the pressure-medium storage container (12) can be connected via the air dryer (10) and via the discharge line to the atmosphere.

2. Closed height control device according to Claim 1, **characterized in that**
- in each of the four compressed-air lines (1-4) there is in each case at least one separate directional control valve (1a-4a) which connects the respective compressed-air line (1-4) in a first switching state and blocks it in a second switching state,
- the first and the fourth compressed-air lines (1,4) being brought together at a point (24) between the directional control valves (1a, 4a) assigned to them and the pressure-medium storage container (12) and being guided from there in a first common compressed-air line (46) to the pressure-medium storage container (12), and
- the second and the third compressed-air lines (2, 3) being brought together at a point (28) between the directional control valves assigned to them and the pressure-medium chambers (6a-6d) and being guided from there in a second common compressed air line (34) to the pressure medium chambers (6a-6d).

3. Closed height control device according to Claim 1, **characterized in that**
- the height control device has at least two controllable directional control valves (2a, 4a) of which each can adopt at least two switching states, and **in that**
- the first compressed-air line (1) is connected by the first controllable directional control valve (2a) and the second compressed-air line (2) is connected by the second controllable directional control valve (4a), and the fourth compressed-air line (4) is blocked by the first controllable directional control valve (2a) and the third compressed-air line (3) is blocked by the second controllable directional control valve (4a) if compressed air is to be transferred from the pressure-medium storage container (12) into a pressure-medium chamber (6a-6d), the two controllable directional control valves (2a, 4a) then being situated in a first switching state, and **in that**
- the third compressed-air line (3) is connected by the second controllable directional control valve (4a) and the fourth compressed-air line (4) is connected by the first controllable directional control valve (2a), and the first compressed-air line (1) is blocked by the first controllable directional control valve (2a) and the second compressed-air line (2) is blocked by the second controllable directional control valve (4a) if compressed air is to be transferred from a pressure-medium chamber (6a -6d) into the pressure-medium storage container (12), both controllable directional control valves (2a, 4a) then being situated in a second switching state.

4. Closed height control device according to either of Claims 2 and 3, **characterized in that** the first compressed-air line (1), starting from the pressure-medium storage container (12), and the third compressed-air line, starting from the pressure-medium chambers (6a-6d), end at a common point (29) which is connected directly to the compressor inlet (14).

5. Closed height control device according to Claim 4, **characterized in that**
- a non-return valve (31) opening towards the compressor inlet (14) is situated in the first compressed-air line (1) between the common point (29) and the controllable directional control valve, by which the first compressed-air line (1) can be connected, and **in that**
- a further non return-valve (33) opening towards the compressor inlet (14) is situated in the third compressed-air line (3) between the common point (29) and the controllable directional control valve, by which the third compressed-air line (3) can be connected.

6. Closed height control device according to one of Claims 3 to 5, **characterized in that** in the third compressed-air line (3) between the controllable directional control valve (4a) and the pneumatic springs (6a-6d), the height control device has a further controllable directional control valve (5) which, in a first switching state, blocks the third compressed-air line (3) and, in a second switching state, connects the third compressed-air line (3).

7. Closed height control device according to one of Claims 1 to 6, **characterized in that** the discharge line is connected to the intake line, with a directional control valve (2a) being arranged between the point (40) at which the discharge line branches off from the fourth compressed-air line (4) and the point (28) at which it is connected to the intake line, the said directional control valve, in a first switching state, blocking the discharge line and, in a second switching state, connecting the discharge line, with the result that the intake valve (30) can be used at the same time as a discharge valve (44).

8. Closed height control device according to Claim 7, **characterized in that** the intake valve (30) is situated in a compressed-air line (32) which branches off from the second common compressed-air line (34).

9. Closed height control device according to either of Claims 7 and 8, **characterized in that** the discharge line corresponds to the second compressed-air line (2) between the point (40) at which it branches off from the fourth compressed-air line (4) and the point (28) at which it is connected to the intake line.

10. Closed height control device according to Claim 1, **characterized in that**
- the height control device has at least two controllable directional control valves (2a, 4a) of which each can adopt at least two switching states, and **in that**
- the first compressed-air line (1) is connected by the first controllable directional control valve (2a) and the second compressed-air line (2) is connected by the second controllable directional control valve (4a) if compressed air is to be transferred from the pressure-medium storage container (12) into a pressure-medium chamber (6a-6d), both controllable directional control valves (2a, 4a) then being situated in a first switching state, and **in that**
- the third compressed-air line (3) is connected by the first controllable directional control valve (2a) and the fourth compressed-air line (4) is connected by the second controllable directional control valve (4a) if compressed air is to be transferred from a pressure-medium chamber (6a-6d) into the pressure-medium storage container (12), both controllable directional control valves (2a, 4a) then being situated in a second switching state.

11. Closed height control device according to one of Claims 1 to 10, **characterized in that** a non-return valve (18) opening towards the pressure-medium storage container (12) is arranged in the fourth compressed-air line (4) between the air dryer (10) and the pressure-medium storage container (12), the said non-return valve being bridged by a compressed-air line (20) in which a throttle (22) is arranged.

12. Closed height control device according to one of Claims 1 to 11, **characterized in that** the height control device has a pressure sensor (42) which is arranged in a compressed-air line starting from the pressure-medium chambers (6a-6d), and **in that** a respective controllable directional control valve (26a-26d) is situated between each pressure-medium chamber (6a-6d) and the pressure sensor, the said directional control valve, in a first switching state, separating the pressure-medium chamber (6a-6d) assigned to it from the pressure sensor (42) and, in a second switching state, connecting this pressure-medium chamber (6a-6d) to the pressure sensor (42).

13. Closed-height control device according to one of Claims 1 to 12, **characterized in that** the height control device has two or more compressors (108, 208, 308, 408), the pressure-medium chambers (6a-6d) being assigned in each case to one of the compressors (108, 208, 308, 408), and
- pressure medium being transferable from the pressure-medium storage container (12) via one of the compressors (108, 208, 308, 408) in each case into each of the pressure-medium chambers (6a-6d) assigned to this compressor (108, 208, 308, 408), the respective compressor inlet (114, 214) then being connected via a first compressed-air line (101, 201), which is connected by a directional control valve (101a, 201a), to the pressure-medium storage container (12) and the respective compressor outlet (116, 216) then being connected via a second compressed-air line (102, 202), which is connected by a directional control valve (102a, 202a), to the pressure-medium chamber (6a-6d) assigned to the compressor (108, 208, 308, 408), and
- pressure medium being transferable from each pressure-medium chamber (6a-6d) via one of the compressors (108, 208) in each case into the pressure-medium storage container (12), the respective compressor inlet (114, 214) then being connected via a third compressed-air line (103, 203), which is connected by a directional control valve (103a, 203a), to the associated pressure-medium chambers (6a-6d) and the respective compressor outlet (116, 216) then being connected via a fourth compressed-air line (104, 204), which is connected by a directional control valve (104a, 204a), to the pressure-medium storage container (12), and
- in one of the compressors (108) an air dryer (10) being arranged in the fourth compressed-air line (104),
- there being an intake line which ends in an intake valve (30) and via which the inlet (114) of one of the compressors (104) can be connected to the atmosphere,
- there being a discharge line which branches off from the fourth compressed-air line (104) at a point (40) situated between the outlet (116) of one of the compressors (108) and the air dryer (10), and which ends in a discharge valve (44), so that the pressure-medium storage container (12) can be connected via the air dryer (10) and via the discharge line to the atmosphere.

14. Closed height control device according to Claim 13 for a vehicle with two or more axles, **characterized in that** the compressors (108, 208) are in each case assigned to the pressure-medium chambers (6a, 6b and 6c, 6d) of an axle.

15. Closed height control device according to Claim 13, **characterized in that** each of the pressure-medium chambers (6a - 6d) is in each case assigned a dedicated compressor (108, 208, 308, 408).

16. Closed height control device according to Claim 13, **characterized in that** it has precisely one air dryer (10), one intake line with intake valve (30) and one discharge line with discharge valve (44).

17. Closed height control device according to one of Claims 1 to 12, **characterized in that** the pressure-medium chambers (6a, 6b and 6c, 6d) of a vehicle axle are combined into groups (50, 50') and each group (50, 50') is assigned a pressure-medium storage container (51, 51') which is connected to the pressure-medium lines (4, 3) leading to the compressor inlet (14) and compressor outlet (16) and is connected via directional control valves (52a-52d) to the pressure-medium chambers (6a-6d).

18. Closed height control device according to Claim 16, **characterized in that** the pressure-medium storage containers (51a, 51b) are connected via non-return valves (53a, 53b) to the pressure-medium lines (3, 4) leading to the compressor inlet (14) and compressor outlet (16), the non-return valves (53a, 53b) blocking in the direction of flow to the pressure-medium storage containers (51a, 51b), and preferably each pressure-medium storage container being assigned a non-return valve (53a, 53b).

19. Closed height control device according to one of Claims 1 - 18, **characterized in that** the pressure-medium chambers (6a-6d) are each assigned a directional control valve (60a-60d), the pressure-medium chambers (6a-6d) being connected in each case to the first or third pressure-medium line (1 or 3) via these directional control valves (60a-60d).

20. Closed height control device according to one of Claims 1 to 19, **characterized by** a line (70) which is connected to the pressure-medium lines of the height control device and is suitable for the connection of external devices.

21. Closed height control device according to Claim 20, **characterized in that** the line leading to the outside has a valve which opens only if an external device is connected to the line.

22. Closed height control device according to Claim 20, **characterized in that** the external device is a tyre-filling device (71).

23. Closed height control device according to Claim 20, **characterized in that** the line (70) leading to the outside is connected to the compressed-air line (2) connected to the compressor outlet (16).

## Revendications

1. Installation fermée de régulation de niveau pour véhicules par laquelle le châssis du véhicule est amorti par rapport à au moins un essieu du véhicule, et qui comprend les composants suivants :
- des chambres (6a-6d) à fluide sous pression
- un compresseur (8)
- un sécheur d'air (10)
- un réservoir (12) de fluide sous pression qui communique par l'intermédiaire du compresseur (8) avec les chambres (6a-6d) à fluide sous pression de telle sorte que
- le fluide sous pression puisse être transféré du réservoir (12) de fluide sous pression jusque dans chaque chambre (6a-6d) à fluide sous pression par l'intermédiaire du compresseur (8), l'entrée (14) du compresseur étant alors reliée au réservoir (12) de fluide sous pression par un premier conduit (1) d'air comprimé ouvert par un distributeur (1a) et la sortie (16) du compresseur étant alors reliée à la chambre (6a-6d) de fluide sous pression par un deuxième conduit d'air comprimé ouvert par un distributeur (2a),
- le fluide sous pression qui provient de chaque chambre (6a-6d) de fluide sous pression peut être transféré dans le réservoir (12) de fluide sous pression par l'intermédiaire du compresseur (8), l'entrée (14) du compresseur étant alors reliée à la chambre (6a-6d) de fluide sous pression par un troisième conduit (3) d'air comprimé ouvert par un distributeur (3a) et la sortie (16) du compresseur étant alors reliée au réservoir (12) de fluide sous pression par un conduit (4) d'air comprimé ouvert par un distributeur (4a), et il existe un conduit d'aspiration qui débouche dans une soupape d'aspiration (30) et par lequel l'entrée (14) du compresseur peut être reliée à l'atmosphère,
**caractérisée en ce que**
- le sécheur d'air (10) est disposé dans le quatrième conduit (4) d'air comprimé,
- il existe un conduit d'évacuation qui part du quatrième conduit (4) d'air comprimé en un point (40) situé entre la sortie (16) du compresseur et le sécheur d'air (10) et qui débouche dans une soupape d'évacuation (44) de telle sorte que le réservoir (12) de fluide sous pression puisse être relié à l'atmosphère par l'intermédiaire du sécheur d'air (10) et du conduit d'évacuation.

2. Installation fermée de régulation de niveau selon la revendication 1, **caractérisée en ce que** :
- au moins un distributeur (1a-4a) est disposé dans chacun des quatre conduits (1-4) d'air comprimé, ouvre le conduit (1-4) d'air comprimé respectif dans un premier état de commutation et le ferme dans un deuxième état de commutation,
- le premier et le quatrième conduit (1, 4) d'air comprimé sont rassemblés en un point (24) situé entre les distributeurs (1a, 4a) qui leur sont associés et le réservoir (12) de fluide sous pression, pour de là conduire au réservoir (12) de fluide sous pression dans un premier conduit commun (46) d'air sous pression et
- le deuxième et le troisième conduit (2, 3) d'air comprimé sont rassemblés en un point (28) situé entre le distributeur et les chambres (6a-6d) de fluide sous pression qui leurs sont associés et de là conduisent aux chambres (6a-6d) de fluide sous pression dans un deuxième conduit commun (34) d'air sous pression.

3. Installation fermée de régulation de niveau selon la revendication 1, **caractérisée en ce que** :
- l'installation de régulation de niveau présente au moins deux distributeurs (2a, 4a) asservis qui peuvent chacun prendre au moins deux états de commutation, et **en ce que** :
- le premier conduit (1) d'air comprimé est ouvert par le premier distributeur asservi (2a), le deuxième conduit (2) d'air comprimé est ouvert par le deuxième distributeur asservi (4a), le quatrième conduit (4) d'air sous pression est fermé par le premier distributeur asservi (2a) et le troisième conduit (3) d'air sous pression est fermé par le deuxième distributeur asservi (4a) lorsque de l'air comprimé provenant du réservoir (12) de fluide sous pression doit être transféré dans une chambre (6a-6d) à fluide sous pression, les deux distributeurs asservis (2a, 4a) étant alors dans un premier état de commutation,
- le troisième conduit (3) d'air comprimé est ouvert par le deuxième distributeur asservi (4a), le quatrième conduit (4) d'air comprimé est ouvert par le premier distributeur asservi (2a), le premier conduit (1) d'air comprimé est fermé par le premier distributeur asservi (2a) et le deuxième conduit (2) d'air comprimé est fermé par le deuxième distributeur asservi (4a) lorsque de l'air comprimé provenant d'une chambre (6a-6d) à fluide sous pression doit être transféré dans le réservoir (12) de fluide sous pression, les deux distributeurs asservis (2a, 4a) se trouvant alors dans un deuxième état de commutation.

4. Installation fermée de régulation de niveau selon l'une des revendications 2 à 3, **caractérisée en ce que** le premier conduit (1) d'air comprimé partant du réservoir (12) de fluide sous pression et le troisième conduit d'air comprimé partant des chambres (6a-6d) à fluide sous pression se terminent en un point commun (29) qui est relié directement à l'entrée (14) du compresseur.

5. Installation fermée de régulation de niveau selon la revendication 4, **caractérisée en ce que** :
- un clapet anti-retour (31) qui s'ouvre vers l'entrée (14) du compresseur est situé dans le premier conduit (1) d'air comprimé entre le point commun (29) et le distributeur asservi par lequel le premier conduit (1) d'air comprimé peut être ouvert,
- et **en ce qu'**un deuxième clapet anti-retour (33) qui s'ouvre en direction de l'entrée (14) du compresseur est situé dans le troisième conduit (3) d'air comprimé entre le point commun (29) et le distributeur asservi par lequel le troisième conduit (3) d'air comprimé peut être ouvert.

6. Installation fermée de régulation de niveau selon l'une des revendications 3 à 5, **caractérisée en ce que** dans le troisième conduit (3) d'air comprimé, l'installation de régulation de niveau présente entre le distributeur asservi (4a) et les amortisseurs pneumatiques (6a-6d) un autre distributeur asservi (5) qui ferme le troisième conduit (3) d'air comprimé dans un premier état de commutation et qui ouvre le troisième conduit (3) d'air comprimé dans un deuxième état de commutation.

7. Installation fermée de régulation de niveau selon l'une des revendications 1 à 6, **caractérisée en ce que** le conduit d'évacuation est relié au conduit d'aspiration et **en ce qu'**entre le point (40) auquel le conduit d'évacuation est dérivé du quatrième conduit (4) d'air comprimé et le point (28) auquel ce conduit d'évacuation est relié au conduit d'aspiration est disposé un distributeur (2a) qui ferme le conduit d'évacuation dans un premier état de commutation et qui ouvre le conduit d'évacuation dans un deuxième état de commutation, de telle sorte que la soupape d'aspiration (30) puisse être en même temps utilisée comme soupape d'évacuation (44).

8. Installation fermée de régulation de niveau selon la revendication 7, **caractérisée en ce que** la soupape d'aspiration (30) est située dans un conduit (32) d'air comprimé qui est dérivé du deuxième conduit commun (34) d'air comprimé.

9. Installation fermée de régulation de niveau selon l'une des revendications 7 à 8, **caractérisée en ce qu'**entre le point (40) auquel le conduit d'évacuation est dérivé du quatrième conduit (4) d'air comprimé et le point (28) auquel ce conduit est relié au conduit d'aspiration, le conduit d'évacuation correspond au deuxième conduit (2) d'air comprimé.

10. Installation fermée de régulation de niveau selon la revendication 1, **caractérisée en ce que** :
- l'installation de régulation de niveau présente au moins deux distributeurs asservis (2a, 4a) qui peuvent chacun prendre au moins deux états de commutation,
- **en ce que** le premier conduit (1) d'air comprimé est ouvert par le premier distributeur asservi (2a) et le deuxième conduit (2) d'air comprimé est ouvert par le deuxième distributeur asservi (4a) lorsque de l'air comprimé provenant du réservoir (12) de fluide sous pression doit être transféré dans une chambre (6a-6d) à fluide sous pression, les deux distributeurs asservis (2a, 4a) étant alors dans un premier état de commutation
- et **en ce que** le troisième conduit (3) d'air comprimé est ouvert par le premier distributeur asservi (2a) et le quatrième conduit (4) d'air comprimé est ouvert par le deuxième distributeur asservi (4a) lorsque de l'air comprimé doit être transféré depuis une chambre (6a-6d) à fluide sous pression jusque dans le réservoir (12) de fluide sous pression, les deux distributeurs asservis (2a, 4a) étant alors dans un deuxième état de commutation.

11. Installation fermée de régulation de niveau selon l'une des revendications 1 à 10, **caractérisée en ce qu'**un clapet anti-retour (18) qui s'ouvre en direction du réservoir (12) de fluide sous pression est disposé dans le quatrième conduit (4) d'air comprimé entre le sécheur d'air (10) et le réservoir (12) de fluide sous pression et est ponté par un conduit (20) d'air comprimé dans lequel est disposé un étranglement (22).

12. Installation fermée de régulation de niveau selon l'une des revendications 1 à 11, **caractérisée en ce que** l'installation de régulation de niveau présente une sonde de pression (42) qui est disposée dans un conduit d'air comprimé qui part des chambres (6a-6d) à fluide sous pression et **en ce qu'**entre chaque chambre (6a-6d) à fluide sous pression et la sonde de pression est chaque fois situé un distributeur asservi (26a-26d) qui dans un premier état de commutation sépare de la chambre de pression (42) la chambre (6a-6d) à fluide sous pression qui lui est associée et dans un deuxième état de commutation relie cette chambre (6a-6d) à fluide sous pression à la sonde de pression (42).

13. Installation fermée de régulation de niveau selon l'une des revendications 1 à 12, **caractérisée en ce que**
- l'installation de régulation de niveau présente deux ou plusieurs compresseurs (108, 208, 308, 408), les chambres (6a-6d) à fluide sous pression étant chacune associée à l'un des compresseurs (108, 208, 308, 408),
- **en ce que** le fluide sous pression qui provient du réservoir (12) de fluide sous pression peut être transféré chaque fois par l'un des compresseurs (108, 208, 308, 408) dans chacune des chambres (6a-6d) à fluide sous pression qui est associée à ce compresseur (108, 208, 308, 408), chaque entrée (114, 214) de compresseur étant alors reliée au réservoir (12) de fluide sous pression par un premier conduit (101, 201) d'air sous pression ouvert par un distributeur (101a, 201a) et chaque sortie (116, 216) de compresseur est alors reliée à la chambre (6a-6d) de fluide sous pression associée aux compresseurs (108, 208,308, 408) par un deuxième conduit (102, 202) ouvert par un distributeur (102a, 202a),
- **en ce que** du fluide sous pression qui provient de chaque chambre (6a-6d) à fluide sous pression peut être transféré dans le réservoir (12) de fluide sous pression chaque fois par l'un des compresseurs (108, 208), chaque entrée de compresseur (114, 214) étant alors reliée aux chambres (6a-6d) à fluide sous pression associées par un troisième conduit (103, 203) d'air comprimé ouvert par un distributeur (103a, 203a) et chaque sortie (116, 216) de compresseur est alors reliée au réservoir (12) de fluide sous pression par un quatrième conduit (104, 204) d'air comprimé ouvert par un distributeur (104a, 204a),
- **en ce qu'**un sécheur d'air (10) est disposé dans le quatrième conduit (104) d'air comprimé près de l'un des compresseurs (108),
- **en ce qu'**un conduit d'aspiration débouche dans une soupape d'aspiration (30) et permet de relier à l'atmosphère l'entrée (114) de l'un des compresseurs (104),
- **en ce qu'**un conduit d'évacuation est dérivé du quatrième conduit (104) d'air comprimé en un point (40) qui est situé entre la sortie (116) de l'un des compresseurs (108) et le sécheur d'air (10) et se termine dans une soupape d'évacuation (44) de telle sorte que le réservoir (12) de fluide sous pression puisse être relié à l'atmosphère par le sécheur d'air (10) et le conduit d'évacuation.

14. Installation fermée de régulation de niveau selon la revendication 13, pour un véhicule qui présente deux ou plusieurs essieux, **caractérisée en ce que** les compresseurs (108, 208) sont chacun associés aux chambres (6a, 6b et 6c, 6d) à fluide sous pression d'un essieu.

15. Installation fermée de régulation de niveau selon la revendication 13, **caractérisée en ce que** chacune des chambres (6a-6d) à fluide sous pression est associée à son propre compresseur (108, 208, 308, 408) respectif.

16. Installation fermée de régulation de niveau selon la revendication 13, **caractérisée en ce qu'**elle présente exactement un sécheur d'air (10), un conduit d'aspiration doté d'une soupape d'aspiration (30) et un conduit d'évacuation doté d'une soupape d'évacuation (44).

17. Installation fermée de régulation de niveau selon l'une des revendications 1 à 12, **caractérisée en ce que** les chambres (6a, 6b et 6c, 6d) à fluide sous pression d'un essieu de véhicule sont rassemblées en groupes (50, 50'), un réservoir (51, 51') de fluide sous pression étant associé à chaque groupe (50, 50') et étant relié aux conduits (4, 3) de fluide sous pression qui conduisent à l'entrée (14) du compresseur et à la sortie (16) du compresseur et aux chambres (6a-6d) à fluide sous pression par des distributeurs (52a-52d).

18. Installation fermée de régulation de niveau selon la revendication 16, **caractérisée en ce que** les réservoirs (51a, 51b) à fluide sous pression sont reliés par des clapets anti-retour (53a, 53b) aux conduits (3, 4) de fluide sous pression qui conduisent à l'entrée (14) du compresseur et à la sortie (16) du compresseur, les clapets anti-retour (53a, 53b) bloquant la direction d'écoulement qui conduit aux réservoirs (51a, 51b) de fluide sous pression et un clapet anti-retour (53a, 53b) étant de préférence associé à chaque réservoir de fluide sous pression.

19. Installation fermée de régulation de niveau selon l'une des revendications 1 à 18, **caractérisée en ce qu'**un distributeur (60a-60d) est associé à chacune des chambres (6a-6d) à fluide sous pression, les chambres (6a-6d) à fluide sous pression étant chacune reliées par ces distributeurs (60a-60d) au premier ou au troisième conduit (1 ou 3) de fluide sous pression.

20. Installation fermée de régulation de niveau selon l'une des revendications 1 à 19, **caractérisée en ce qu'**un conduit (70) relié aux conduits à fluide sous pression de l'installation de régulation de niveau permet de raccorder des appareils externes.

21. Installation fermée de régulation de niveau selon la revendication 20, **caractérisée en ce que** le conduit qui mène vers l'extérieur présente une soupape qui n'est ouverte que lorsqu'un appareil externe est raccordé au conduit.

22. Installation fermée de régulation de niveau selon la revendication 20, **caractérisée en ce que** l'appareil externe est un dispositif (71) de gonflage des pneus.

23. Installation fermée de régulation de niveau selon la revendication 20, **caractérisée en ce que** le conduit (70) qui mène vers l'extérieur est raccordé au conduit (2) d'air comprimé qui est relié à la sortie (16) du compresseur.
